**Europäisches Patentamt**

(19) **European Patent Office**

**Office européen des brevets**

(11) Publication number : **0 528 902 B1**

(12) # EUROPEAN PATENT SPECIFICATION

(45) Date of publication of patent specification :
**17.08.94 Bulletin 94/33**

(51) Int. Cl.⁵ : **A21D 2/18,** A21D 2/26,
A23L 1/308

(21) Application number : **91909274.2**

(22) Date of filing : **24.04.91**

(86) International application number :
**PCT/DK91/00108**

(87) International publication number :
**WO 91/15957 31.10.91 Gazette 91/25**

(54) **A DOUGH OR BATTER COMPOSITION, A PROCESS FOR MAKING A FAT-REDUCED BAKERY PRODUCT, AND A FAT-REDUCED BAKERY PRODUCT.**

(30) Priority : **26.04.90 DK 1036/90**
**02.08.90 DK 1852/90**

(43) Date of publication of application :
**03.03.93 Bulletin 93/09**

(45) Publication of the grant of the patent :
**17.08.94 Bulletin 94/33**

(84) Designated Contracting States :
**AT BE CH DE DK ES FR GB GR IT LI LU NL SE**

(56) References cited :
**EP-A- 0 412 639**
**US-A- 4 451 490**
**US-A- 4 774 099**
**US-A- 4 798 733**

(73) Proprietor : **DANISH CROWN INCORPORATED A/S**
**Marsvej 43**
**DK-8900 Randers (DK)**

(72) Inventor : **CHRISTENSEN, Bent**
**Saebyvej 549**
**DK-9800 Hjorring (DK)**
Inventor : **MOGENSEN, Frits**
**Blishonevej 16**
**DK-9800 Hjorring (DK)**
Inventor : **HOLMAGER, Leif**
**Malmmosevej 82**
**DK-2840 Holte (DK)**

(74) Representative : **Andersen, Henrik Rastrup et al**
**c/o Plougmann & Vingtoft A/S,**
**Sankt Annae Plads 11,**
**P.O. Box 3007**
**DK-1021 Copenhagen K (DK)**

EP 0 528 902 B1

## Description

### FIELD OF THE INVENTION

The present invention relates to a dough or batter composition for use in making a fat-reduced non-bread bakery product, a process for making the bakery product and bakery products obtainable by the process.

### TECHNICAL BACKGROUND OF THE INVENTION

In most countries bakery products including cakes, cookies, and biscuits having high fat energy contents constitute a significant part of the daily diet. Over the last decades there has been an increasing awareness that high intake of dietary fat is an important causal factor in the development of obesity, cardiovascular disorders and certain cancer diseases. This awareness has accelerated efforts to have the dietary energy intake reduced e.g. by developing food products having a lower calorie content and at the same time retaining the sensory and technological characteristics associated with conventional products.

In bakery products, energy-giving substances include carbohydrates, protein and fat. The conventionally used content of fat in commercial bakery products depends primarily on the type of product in question. Thus, the fat content in cookies is typically in the range of 20-35 wt%, whereas several types of conventional cakes may have a fat content which is in the range of 15-30% by weight.

In the present context the term "fat" designates edible lipid substances in a general sense, including natural or synthesized fats and oils consisting essentially of triglycerides such as for example soybean oil, sunflower oil, corn oil, cottonseed oil, olive oil, palm oil, coconut oil or fat, butter fat, lard, tallow and fish oil, which may be partially or completely hydrogenated, fractionated, inter-esterified or modified otherwise, as well as edible lipid materials having properties similar to triglycerides which materials may be indigestible such as polyol fatty acid polyesters.

In a bakery product, the content of fat as defined above may be in the form of an added fat ingredient, the composition of which is normally selected on the basis of physical and chemical characteristics of the fat such as melting points, degree of fatty acid saturation, water content and plasticity. Typically used fat ingredients in bakery product include soft plastic shortenings derived from refined vegetable oils; butter; soft margarine and vegetable oils. Of these ingredients, butter and margarines are emulsions of fat and water wherein the aqueous phase typically is in the range of 15-25 wt%. The aqueous phase of butter and margarines used in the baking industry may contain proteins, sugars and salts.

It is generally recognized that the fat conventionally added to bakery products has a number of advantageous effects on the technological and eating quality of the products, the nature of which depends on the particular type of product.

Thus, it is assumed that the primary technological effect of fat in a cake batter is to occlude the numerous gas bubbles which are generated during the mixing stage and which, as they burst one into another during baking will form the foam-like porous structure of the cake crumb. An other advantageous effect of fat in bakery products is a contribution to water retention in the product during storage hereof. Furthermore, it is assumed that the major function of fat in biscuits is to improve the eating quality by conferring a soft and tender texture. The fat ingredient in cookies is considered to be particularly important for the desired eating quality, especially in regard to crispness and mouth-feel.

Previously, most efforts in the baking industry to reduce the energy or calorie content of bakery products have been directed to the following strategies:

(1) substituting part of digestible (assimilable) carbohydrates deriving from flour with non-digestible carbohydrates, i.e. by using flour substitutes including $\alpha$-amylose, cellulose-containing products including cereal brans, crystalline cellulose and cellulose derivatives such as cellulose ether and ester derivatives,

(2) adding the above non-digestible carbohydrates as "bulking" ingredients to conventional bakery product recipes thereby obtaining a reduced calorie content by a proportionate dilution of the digestible ingredients, or

(3) adding to a conventional bakery product composition small amounts of strongly water binding ingredients e.g. in the form of hydrocolloid vegetable gums such as guar gum, alginates, pectic substances and carrageenans, and additional amounts of water in order to obtain a baked product in which the calorie content is reduced as a result of an increased incorporation of water.

It is also known in the art to combine the above-defined strategies. These known measures of reducing the calorie content of bakery products may result in reductions hereof typically being in the range of 10-30% relative to conventional products.

However, in fat-containing bakery products the fat ingredient contributes highly to the total calorie content due to the fact that fat has an energy content which per unit weight is about twice that of carbohydrates and proteins.

From the point of view of reducing the dietary energy intake, a similar or even higher effect than that obtained by the above measures is therefore obtainable by reducing or totally omitting the fat ingredient even if the proportion hereof is relatively small. A reduction of the fat content of bakery products will not only result in an overall dietary calorie reduction but will in itself contribute to the provision of dietetically improved products since a direct consumption of fatty substances, in particular animal fats having a relatively high content of saturated fatty acids and cholesterol, is highly associated with cardiovascular diseases including atherosclerosis.

Among dietitians it is generally recognized that the contribution of fat to the total energy intake should preferably not exceed 30% in an optimally balanced diet and that a dietetically desirable fat energy:total energy ratio may be more important than the total energy content of a food product. In the present context, therefore a dietetically preferable way of reducing the calorie content of conventionally fat-containing bakery products is to reduce the content of fat hereof as much as possible, and at the same time maintain in the product recipe a large proportion of assimilable carbohydrates.

In spite of the obvious dietary advantages, there have been only few attempts in the art to develop fat-reduced bakery products wherein the fat ingredient or part thereof is directly replaced by other ingredients having a lower energy content. It may reasonably be assumed that this lack of progress in the field of developing fat-reduced bakery products is ascribable to the fact that it involves great difficulties to select fat replacement ingredients which are useful in the baking industry in the sense that they can replace the above-mentioned technologically and sensory advantageous effects of fat.

In GB 1 580 015 is disclosed a flour substitute composition comprising cellulose/non-digestible starch, xanthan gum and an emulsifying agent which composition can be used to replace up till 70% of the conventionally used wheat flour. As an example, a cake is prepared in which 50% of flour is replaced by the above composition and wherein at the same time about 50% of the conventionally used shortening is omitted and a corresponding amount of water which is bound by the flour substitute composition is added in place of the omitted fat ingredient.

DD 109 501 teaches a process for preparing a low calorie cake particularly intended for diabetic patients, the recipe of which comprises 38.7% flour, 38.7% boiled potatoes, 15.5% water, 1.6% oil, 0.9% yeast, a sweetening agent and baking powder. It is stated that the potato ingredient is added as a low calorie bulking ingredient to replace high-calorie ingredients conventionally used in cakes including sugar, protein and fat such ingredients being undesirable in a diet for diabetics. In the disclosed recipe, the boiled potato ingredient therefore is clearly not added to replace an equivalent amount of conventionally added fat.

In US 3 872 228 is taught a process for making calorie reduced baked products wherein 30-40% of the flour is replaced by a mixture of non-digestible amylose and pullulan. In one example, cocoa biscuits are disclosed in which, additionally to the flour substitution, about half of the conventionally used fat content of 16.6 wt% has been omitted and thereby "replaced" by corresponding proportionate amounts of the other ingredients. It is, however, indicated that the resulting low calorie biscuits becomes harder than conventional reference products.

Waring (Food Technology, 1988, 42, 114-117) has described a commercial shortening replacer composition comprising modified, pre-gelatinised maize starch, guar gum, emulsifying agents and skimmed milk powder. This composition is claimed to be useful as a shortening replacer in cake mixes in which a conventional content of 10-12% by weight of shortening can be replaced at a 6-8% use level, and in butter cookies where about 50% of the conventionally used butter may be replaced by the composition. However, it is stated in this disclosure that the amount of guar gum which can be used is limited due to the undesirable taste of this ingredient.

US 4,774,099 discloses a batter composition for making brownies and brownie-like products which compositions comprise 65 wt% to 88 wt% of a dry mix comprising 0.1 to 10 wt% cellulosic fiber having a high water absorbency, 0 wt% to 4 wt% starch, 3 wt% to 18 wt% shortening and 45 wt% to 65 wt% sugar. Accordingly, the disclosed batter composition has a sugar content being in the range of 29.25 wt% to 57.2 wt%. The aims of the invention is to provide brownies which relative to standard brownies have improved crumb structure characteristics and improved taste, in particular brownies without a fudgy bottom layer and an increased height.

The present invention provides the means of making dietetically advantageous fat-reduced non-bread bakery products containing at the most 20 wt% fat whereby the fat content of conventional dough or batter compositions is at least partially replaced by a non-cereal vegetable ingredient comprising dietary fiber and digestible starch, optionally in an aqueous phase, the ingredient being added in amounts which, including an optional aqueous phase are essentially equivalent to the amount of fat being replaced. It has surprisingly been found that the incorporation of such an ingredient in dough or batter compositions in accordance with the invention results in fat-reduced bakery products having essentially the same desirable technological and eating quality characteristics as those of corresponding conventional products having a higher fat content.

SUMMARY OF THE INVENTION

In one aspect, the present invention provides a dough or batter composition for use in making a fat-reduced non-bread bakery product and having a fat content which is at the most 20 wt% when the bakery product to be made is a cookie or a biscuit and which is at the most 13 wt% when the bakery product to be made is a cake, the composition containing 1-40 wt% of a non-cereal vegetable ingredient comprising dietary fiber and digestible starch in a weight ratio which is in the range of 1:50 to 1:1, the proportion of the dietary fiber being at least 5 wt% of the vegetable ingredient dry matter when determined' as non-starch polysaccharides (NSP), and the proportion of starch being at least 50 wt% of the vegetable ingredient dry matter, the composition containing less than 25 wt% cereal bran and having a ratio between the non-cereal vegetable ingredient dry matter and fat which is in the range of 1:19 to 4.5:1.

In a further aspect, the present invention relates to a process for making a fat-reduced bakery product comprising

(1) preparing a dough or batter composition having a fat content which is at the most 20 wt% when the bakery product to be made is a cookie or a biscuit and which is at the most 13 wt% when the bakery product to be made is a cake, the composition containing 1-40 wt% of a non-cereal vegetable ingredient comprising dietary fiber and digestible starch in a weight ratio which is in the range of 1:50 to 1:1, the proportion of the dietary fiber being at least 5 wt% of the vegetable ingredient dry matter when determined as non-starch polysaccharides (NSP), and the proportion of starch being at least 50 wt% of the vegetable ingredient dry matter, the composition containing less than 25 wt% cereal bran and having a ratio between the non-cereal vegetable ingredient dry matter and fat which is in the range of 1:19 to 4.5:1, to obtain a dough or a batter,

(2) optionally dividing the dough or the batter into suitable portions, and

(3) baking the dough or the batter,

to obtain the fat-reduced bakery product.

In a still further aspect, the present invention relates to a fat-reduced bakery product obtainable by the above-defined process.

DETAILED DISCLOSURE OF THE INVENTION

It is an object of the present invention to provide fat-reduced non-bread bakery products. As used herein, the term "non-bread bakery product" refers to baked products, the crumb structure of which is not a yeast-leavened gluten-containing matrix system. Accordingly, the non-bread bakery products herein include as examples cakes, cookies, biscuits, scones and muffins. The fat-reduced products provided have essentially the same desirable technological and sensory characteristics as those of corresponding product types having a higher fat content.

Accordingly, the present invention teaches the manner in which a substantial part of the fat which is used in a conventional dough or batter composition can be replaced by a vegetable ingredient as previously defined so that the resulting fat-reduced bakery products have essentially the same characteristics such as structure, texture, taste, flavour and keeping quality as those of corresponding conventional products. It will, however, be understood that the term "fat-reduced" as used herein does not indicate in exact terms the amount of fat which is replaced by the vegetable ingredient but is used rather to characterize that the bakery products according to the invention has a fat content which is less than that of most conventional products of the same product types. Obviously, the most interesting fat-reduced bakery products according to the invention are those products where close to 100 wt% of the above-mentioned conventionally used fat contents is replaced. It is, however, also of considerable interest to achieve replacement of part of a conventionally used fat content such as at least 10 wt% hereof, although it is preferred to replace at least 25 wt%, more preferred to replace at least 50 wt%, even more preferred to replace at least 75 wt% and particularly preferred to replace at least 90 wt%.

As it has been explained above, the content of fat in a bakery product may be in the form of an added fat ingredient, optionally comprising an aqueous phase. Several other ingredients traditionally used in bakery product compositions such as egg yolk, wheat flour, cocoa, emulsifying agents and yeast may inherently contain a certain proportion of fat. Accordingly, a bakery product may, depending on the ingredient composition have a total content of fat which is higher than the amount of the fat deriving from the added fat ingredient. In the present context, the term "fat-reduced" as defined above refers mainly to a bakery product according to the invention where the added fat ingredient is replaced.

4

As mentioned above, the present invention relates in one aspect to a dough or batter composition which is useful in making a fat-reduced bakery product and having a fat content which is at the most 20 wt% when the bakery product to be made is a cookie or a biscuit and which is at the most 13 wt% when the bakery product to be made is a cake. In one embodiment, the composition is a composition for making a cookie or a biscuit, having a fat content which is at the most 15 wt%. In a further embodiment hereof, the above composition has a fat content which is at the most 10 wt%, preferably at the most 8 wt% and in particular at the most 5 wt%. In an other embodiment of the present invention, the composition is a composition for making a cake, having a fat content which is at the most 10 wt%. In a further embodiment hereof, the above composition has a fat content which is at the most 8 wt%, preferably at the most 5 wt% and in particular at the most 3 wt%.

In general terms, a cake can be defined as a bakery product made from a batter having a viscosity typically being in the range of 10 to 100 g/cm.s when determined with a spindle type viscometer, the major ingredients of the batter being selected from flour; a fat-containing ingredient such as shortening, margarine or butter; sugar; eggs; water; leavening agent such as baking powder or powdered ammonia, which major ingredients in the cake forms a chemically-leavened system whose matrix is a foam structure having the batter as the lamella and a combination of air introduced during mixing, and water vapour and baking powder carbon dioxide released during baking, as the gaseous phase. In addition to the above-mentioned major ingredients, cake recipes may include minor ingredients such as emulsifying agents, flavouring agents or antioxidants. Typically used emulsifying agents in cake recipes include mono- and diglycerides and polyglycerol monoesters.

There are numerous traditional types of cakes made according to recipes having varying compositions. Typical examples of conventionally fat-containing cakes include as examples, enriched sponge cakes, Victoria cakes, high-ratio cakes and pound cakes.

It has now surprisingly been found that a high proportion of the fat content of traditional cake batter compositions can be replaced with a vegetable ingredient as defined above and that such compositions when used in the making of cakes result in fat-reduced cakes in which no significant changes of characteristics normally associated with the high fat content are found. As an example, a pound cake composition according to the invention is prepared by omitting from a conventional pound cake recipe comprising 25 wt% margarine containing 80 wt% fat, 75% of the margarine and adding to the recipe 6.3 wt% of a mixture of potato fiber and potato starch, and 6.3 wt% of water. The thus fat-reduced baked pound cake has essentially the same volume, crumb structure, texture, water retention properties and taste as a pound cake made from a composition according to the original recipe.

Typically, conventional recipes for cookie doughs include the following major ingredients: flour, sugar, salt, egg components, a fat-containing ingredient such as butter, shortening or margarine, in an amount as previously defined, and optionally a chemical leavening agent. Generally, the sugar content of cookies is relatively high such as in the range of 10-20 wt% and accordingly, cookies are also frequently referred to as "sugar cookies". A typical recipe for a biscuit dough include flour, water or skim milk, a chemical leavening agent, salt and a fat-containing ingredient in an amount as referred to above. Examples of fats typically used in the making of biscuits include blends of oils of vegetable or animal origin. Traditional types of biscuits as defined above include as examples water biscuits, crackers and sugar-containing biscuit products such as semi-sweet and sweet biscuits.

A traditional recipe for preparing a dough for muffins or scones comprises the following major ingredients: flour, sugar, baking powder, salt, egg white and a fat-containing ingredient, the amount of which is typically in the range of 10-15 wt%.

As previously mentioned, the dough or batter composition according to the invention contains 1-40 wt% of a non-cereal vegetable ingredient as defined above. It has surprisingly been found that such an ingredient when added to a dough or batter composition in place of fat, is capable of conferring to the bakery product made from the composition the characteristics which are normally associated with the presence of the fat content being replaced. It is believed that these surprising effects of the vegetable ingredient is related to the findings that it is capable of having or being brought into a homogeneous consistency without sensory recognizable particles in the dough or batter composition according to the invention and importantly, that it has a neutral taste and colour for which reason the ingredient does not affect the desired sensory characteristics of the resulting bakery products. In the present context, a neutral taste means that the taste of the vegetable non-fat ingredient even when it is present in a fat-reduced bakery product in the highest amount as defined above, can not be recognized or identified by the human senses. A further interesting characteristic of the vegetable ingredient is that it is readily miscible with other ingredients of the dough or batter composition in such a manner that the composition obtained has essentially the same viscosity and volume as those of a conventionally fat-containing dough or batter composition.

Non-cereal vegetable ingredients which are useful in the present invention are selected on the basis of the amount and the chemical and physical characteristics of the dietary fiber and the digestible starch contained therein.

As used herein the term "starch" refers to a high-polymeric carbohydrate occurring in plants in the form of white granules, the average size of which in terms of the largest diameter varies considerably according to the botanical origin. Thus, the size of starch granules from grains vary between 3 and 20 μm and those from roots and tubers such as tapioca, arrowroot or potatoes have sizes typically being between 10 and 100 μm. It has been found that starch which in its native form consists of granules having an average size in the range of 20-200 μm is useful in the above-defined non-cereal vegetable ingredient.

An interesting property of starch granules is their ability to swell progressively in water as the temperature is raised into the range of 60-70°C. This swelling is an indication of the binding of water to the starch. Above this temperature level the granules undergo gelatinization. Starches which have been pre-gelatinised swells and gelatinize readily at temperature levels below that indicated above for non-treated starches. In the baking industry, doughs or batters are generally prepared at ambient temperature. Accordingly, the starch of the non-cereal vegetable ingredient may advantageously be in a pre-gelatinised form.

Non-cereal starches which are modified by heating with or without the addition of chemical reagents may acquire properties which make them useful in the present invention. As an example, treatment of such starches with acids such as sulphuric acid causes a partial hydrolysis, whereby "thin-boiling" starches are obtained. Starches may also be oxidized, e.g. by treatment with hypochlorite resulting in chlorinated starches. Derivatives of non-cereal starches including starch esters such as acetates and carbamates of starch or starch ethers including as an example hydroxy alkyl starch, may also be useful components of the vegetable ingredient. In the context of the present invention, the term "starch" is understood to include modified starches or modified starch fractions as defined above as well as the above-defined starch derivatives.

Furthermore, non-cereal starches hydrolyzed by treatment with organic or inorganic acids or bases or with starch hydrolyzing enzymes such as amylases or α-glucanases are embraced by the term "starch" as used herein.

It has been found-that a non-cereal dietary fiber-containing vegetable ingredient comprising at least 50 wt% of starch in the dry matter is a useful fat replacement ingredient as defined herein. However, in particular embodiments it may be preferable that the proportion of starch in the vegetable ingredient is at least 60 wt% and even more preferable that it is at least 70 wt%.

In general, non-cereal starch selected from plant tuber starches and plant starches have a high water binding capacity which make them useful in the present invention. As an example, potato starch has the highest known water binding capacity of any starch. In one embodiment, the starch of the non-cereal vegetable ingredient is native starch. In the present context, the term "native" indicate that the starch is essentially in the form in which it is present in the fresh plant material and that it has not been chemically or enzymatically modified.

A useful non-cereal vegetable ingredient as previously defined has a dietary fiber content of the dry matter which is at least 5 wt%. As used herein, the generic term "dietary fiber" refers to a non-starch polysaccharide of plant or microbial origin which resists digestion by the human alimentary enzymes. Plant materials are important sources of dietary fibers which constitute the major structural components of plant cell walls in the form of cellulose, non-cellulosic polysaccharides including hemicellulose and pectic substances, and lignin. All dietary fibers apart from lignin are non-starch polysaccharides (NSP). The term NSP is frequently used as a practical indication of the dietary fiber content of a plant material. Cell walls of immature plants typically contains about 25 wt% cellulose, 60 wt% non-cellulosic polysaccharides and a trace of lignin, whereas the mature cell wall contains about 38 wt% cellulose, about 43 wt% non-cellulosic polysaccharides and about is wt% or lignin.

Among the above-mentioned dietary fibers, cellulose, lignin and some hemicelluloses are substantially water-insoluble. Remaining hemicelluloses and some pectic substances are at least partially water soluble. From this explanation it will be understood that the degree of water solubility of a dietary fiber-containing plant material depends on the composition of the dietary fiber component hereof. As examples, about 55% of the potato dietary fiber component and about 60-70% of the dietary fiber component of sugar beets, are water insoluble. In the present context, the term water solubility of dietary fiber is related to the enzymatic method for simultaneous determination of soluble and insoluble fiber published in J. Assoc. Official Anal. Chem., 1985, 68, No. 4.

The proportion of dietary fiber in plant materials varies also according to the species. As examples, potatoes contain about 2.0 wt% and carrots about 2.1 wt% of NPS on a fresh weight basis, i.e. about 10 wt% in the dry matter.

In accordance with the above definition hereof, the dietary fiber of the present non-cereal vegetable ingredient may be in the form of a partially water-insoluble NPS-containing plant material. The term "partially water-insoluble" is used in the present context to indicate that less than about 50 wt% of the dietary fiber is water soluble. However, the term "dietary fiber" as used herein does also include a group of polysaccharide hydrocolloids typically being more than 90% water soluble which are widely used in the food industry as thickening, gelling or stabilizing ingredients. This group includes water soluble cellulose derivatives such as carboxymethylcellulose and hydroxypropyl methylcellulose, alginic acid or salts or esters thereof, vegetable or microbially derived gums, pectins, carrageenans, mucilages and alginates.

In accordance with the above definition, the non-cereal vegetable ingredient has a dry matter content of dietary fiber which is at least 5 wt%. In other embodiments, the content of dietary fiber in the vegetable ingredient dry matter may advantageously be at least 10 wt% or more such as at least 15 wt%. In one embodiment, the dietary fiber is native fiber which in accordance with the above definition of the term "native" indicate that the dietary fiber is substantially in the form in which it is present in the fresh plant material and that it has not been chemically or enzymatically modified.

As previously mentioned, the dough or batter composition as defined herein contains a non-cereal vegetable ingredient comprising dietary fiber and starch in a weight ratio which is in the range of 1:50 to 1:1. In useful embodiments of the invention, the vegetable ingredient may contain dietary fiber and starch in a weight ratio which is in the range of 1:32 to 1:1. In other useful embodiments the weight ratio is 1:20 to 1:2, preferably in the range of 1:15 to 1:3 and most preferably in the range of 1:10 to 1:4.

In specific embodiments of the invention, the non-cereal vegetable ingredient is a native non-fractionated plant material having a water content of at least 70 wt%. Such a plant material may be selected from plant tuber materials such as potatoes, and plant root materials including tapioca roots, cassava roots and arrowroots. In the present context, the term "non-fractionated" is used to indicate that the composition of the dry matter of the plant material is substantially unaltered relative to the composition of the plant material in its fresh state. In useful embodiments, the thus defined vegetable ingredient may be in a pre-cooked form. It is reasonably believed that i.a. the swelling of starch resulting from the pre-cooking may increase the water binding capacity of the ingredient advantageously. Furthermore, the pre-cooking of the vegetable ingredient will result in a tender or soft texture hereof which facilitates an optionally required comminution step. Suitable time/temperature conditions for pre-cooking varies according to the type of vegetable ingredient. As an example, peeled potatoes are pre-cooked by boiling in open air for about 20 minutes or in a pressure cooker for a time period sufficient to obtain the same tenderness as that obtained by the above open air boiling.

In further embodiments of the invention, the dough or batter composition contains a non-cereal vegetable ingredient which is a dry ingredient having an inherent water content of the most 20 wt% such as at the most 10 wt%. Such a dry vegetable ingredient may preferably be a non-fractionated plant material as defined above from which at least part of the water content has been removed by a drying process. As an example, a dried fresh or pre-cooked potato material is included.

In one embodiment, the dry non-cereal vegetable ingredient is a mixture of a separated non-cereal starch and a separated non-cereal dietary fiber component. In the present context, the term "separated" is used to indicate that the starch or the dietary fiber is present in at least partially purified form. As an example, such a vegetable ingredient may be a mixture of a starch component selected from potato starch, arrowroot starch and tapioca starch, and a dietary fiber component selected from separated potato fiber, beet fiber, soy bean fiber, pea fiber, potato pulp and fruit pulp. As used herein the term "pulp" refers to plant waste materials deriving from industrial processes such as potato pulp which is the material remaining when starch has been partially extracted from raw potatoes. A typical composition of an industrially prepared potato pulp is as follows: starch 30 wt%, cellulose 25-30 wt%, hemicellulose 10.15 wt%, pectic substances 15 wt%, ashes 5 wt% and protein 5 wt%. When at least part of the starch content of such a material is removed it is referred to as potato fiber.

In still further embodiments, the non-cereal vegetable ingredient is obtained by supplementing a native non-fractionated plant material of which the dry matter proportion of dietary fiber is less than 5 wt% with a sufficient amount of separated non-cereal dietary fiber as previously defined or by supplementing a native non-fractionated plant material of which the dry matter proportion of starch is less than 50 wt% with a sufficient amount of non-cereal starch as defined above. In this context, the term "sufficient amount" is used to indicate that the amount of non-cereal dietary fiber or of non-cereal starch with which the plant material is supplemented is an amount resulting in a proportion of dry matter non-cereal dietary fiber which is at least 5 wt% or a proportion of dry matter non-cereal starch which is at least 50 wt%. As an example, carrots which in their dry matter have a dietary fiber content exceeding 5 wt% but a starch content which is less than 50 wt% may be supplemented with a sufficient amount of a non-cereal starch material.

The above-defined non-cereal vegetable ingredient may advantageously be subjected to a comminution by conventional comminution processes such as milling, grinding or roller treatment to obtain vegetable ingredients having particle sizes being e.g. in the range of 0.01 to 2.0 mm. Such comminuted ingredients may e.g. be provided in the form of granules, flakes or a powder.

In accordance with the invention, a dry non-cereal vegetable ingredient as defined above may be added in the dry form to the dough or batter composition, optionally together with an amount of water corresponding at least partially to the balance between the water content of a fresh and a dry vegetable material. However, the dry ingredient may also be hydrated prior to use by subjecting the ingredient to a rehydration or a soaking step at ambient temperature or at an elevated temperature such as in the range of 25-100°C for a period of time required to obtain a suitable rehydration and/or binding of water to the dietary fiber and starch. When the dry vegetable ingredient is not in a pre-cooked form, the rehydration or soaking step may preferably be carried out at an elevated temperature at which swelling of the starch occurs.

In one specific embodiment of the invention, the dough or batter composition contains as the non-cereal vegetable ingredient a potato material, an advantageous feature whereof is a bland and neutral taste which allows the addition of the material to the dough or batter composition in amounts within the defined range without any detectable adverse effects on the flavour of the fat-reduced bakery products. Such a material may be in the form of pre-cooked whole potatoes; dried pre-cooked potatoes e.g. in the form of a powder, flakes or granules; and rehydrated dried pre-cooked potatoes. The potato material may when it is in the form of pre-cooked whole potatoes advantageously be comminuted prior to use.

As previously defined, the dough or batter composition according to the present invention contains the thus defined non-cereal vegetable ingredient in an amount being in the range of 1-40 wt%. In specific embodiments, advantageous amounts are in the range of 1.5-20 wt% such as in the range of 5-15 wt%. A further feature of the dough or batter composition is that it contains less than 25 wt% of cereal bran and has a ratio between the dry matter of the above-defined vegetable ingredient and fat which is in the range of 1:19 to 4.5:1. In one particular embodiment, this ratio is in the range of 1:3 to 1:1.

In a further aspect, the present invention relates to a process making a fat-reduced bakery product which process as it has been defined above, comprises preparing a dough or batter composition as also defined above, to obtain a dough or batter, optionally dividing the dough or batter and baking same to obtain the fat-reduced bakery product according to the invention. In this context, it is an advantageous feature of the non-cereal vegetable fat replacement ingredient that it can be readily mixed with conventionally used non-fat ingredients to obtain the dough or batter composition. As it has been explained previously it may, however, in specific embodiments be required to subject the vegetable ingredient to a pre-comminution step to obtain a suitable texture of the dough or batter. As also explained above, it may be advantageous to rehydrate or pre-soak a dry vegetable ingredient at a suitable temperature prior to mixing the ingredient with the other ingredients. Provided such required pre-treatments of the vegetable ingredient are carried out, a batter or a dough as herein defined is obtainable with the use of processes which are useful for preparing conventionally fat-containing dough or batters. Furthermore, the texture and viscosity of the obtained doughs or batters are essentially as those of corresponding doughs or batters in which the fat has not replaced and accordingly, the steps of dividing and baking a dough or batter obtained from a composition according to the invention does not require any modifications of procedures traditionally used in the art.

In a still further aspect, the present invention relates to a fat-reduced bakery product obtainable by the process as defined herein. In one specific embodiment, the fat reduced bakery product is a cookie made from a dough composition having a fat content being at the most 15 wt% such as a dough composition consisting of 41.9 wt% wheat flour, 16.1 wt% sugar, 3.2 wt% whole egg, 16.1 wt% margarine with a fat content of 80 wt%, 0.8 wt% potato fiber, 13.7 wt% potato starch and 8.1 wt% water. In an other specific embodiment, the fat reduced bakery product is a cookie made from a dough composition having a fat content being at the most 8 wt% such as a dough composition consisting of 32.9 wt% wheat flour, 17.5 wt% sugar, 3.5 wt% whole egg, 8.7 wt% margarine with a fat content of 80 wt%, 0.9 wt% potato fiber, 26.9 wt% potato starch and 8.7 wt% water.

In a further embodiment, there is provided a pound cake made from a batter composition having a fat content which is at the most 13 wt% including as a specific example a composition containing the following ingredients: 25.0 wt% wheat flour, 1.0 wt% starch, 19.3 wt% sugar, 0.8 wt% baking powder, 0.3 wt% glycerol ester, vanilla flavour, 25.0 wt% whole egg, 12.5 wt% margarine containing 80 wt% fat, and 12.5 wt% of pre-cooked, comminuted potatoes.

In a still further embodiment of the invention there is provided a pound cake made from a batter composition having a fat content which is at the most 8 wt% such as a composition containing the following ingredients: 25.0 wt% wheat flour, 1.0 wt% starch, 19.3 wt% sugar, 0.8 wt% baking powder, 0.3 wt% glycerol ester, vanilla flavour, 25.0 wt% whole egg, 6.3 wt% margarine containing 80 wt% fat, 6.3 wt% of a mixture of dry potato fiber and dry potato starch, and 6.3 wt% water.

The invention is further illustrated in the following examples.

EXAMPLE 1A

Pound cakes wherein 25, 50. 75 and 90 wt%, respectively of the margarine of a reference pound cakes containing 25 wt% margarine is replaced by pre-cooked potatoes

In this example a pound cake made according to the following batter recipe was used as the reference product:

```
Wheat flour                          400 g
Starch                                16 g
Sugar                                308 g
Baking powder                         12 g
Polyglycerol ester                     4 g
Sorbitol, salt, milk dry matter       60 g
Vanilla flavour                          qs
Liquid whole eggs                    400 g
Soft margarine, 80 wt% fat           400 g

Total batter weight                 1600 g
```

Using the above recipe containing 25 wt% of margarine (margarine:flour weight ratio 1:1) as the starting point, a series of pound cake test batters were prepared wherein 25, 50, 75 and 90 wt%, respectively of the soft margarine was substituted with equivalent amounts of mashed boiled potatoes. Accordingly, the test batters had the following contents of fat deriving from the margarine: 15.0, 10.0, 5.0 and 2.0 wt%. The weight ratios between margarine content and flour content were 1:1.25, 1:2, 1:4 and 1:9, respectively.

The whole boiled potatoes were pre-comminuted to a particle size of about 2 mm by grinding twice by means of a meat grinder.

The ingredients for the reference product and the test batters were mixed in one step by means of a Hobart™ N 50 mixer operating in second gear for 4 minutes. The degree of aeration of the resulting batters were measured in terms of weight/litre. 375 g portions of the batters were distributed into ordinary cake tins and baked in an oven at 180°C for 40 minutes.

After baking, the cakes were kept cool for 4 days prior to judging the characteristics hereof. The following characteristics were assessed or measured: (1) aeration which is an indication of the weight of 1 litre of batter, (2) volume, i.e. the volume in $cm^3$/kg cake; (2) colour, (3) crumb texture and (4) crumb porousness. The results of the assessments/measurements are summarized in the below table.

TABLE 1

**Characteristics of reference pound cake and pound cakes wherein 25, 50, 75 and 90 wt%, respectively of the margarine is replaced by pre-cooked potatoes**

| Charac-teristic | Degree of fat replacement | | | | |
|---|---|---|---|---|---|
| | 0 | 25% | 50% | 75% | 90% |
| Aeration | 735 g | 810 g | 882 g | 964 g | 1018 g |
| Volume | 1020 | 1008 | 958 | 882 | 870 |
| Colour | good | good | good/- light | too light | too light |
| Texture | good/- slightly gritty | good | good/- juicy/- solid | solid | solid |
| Porous-ness | good/- even | few chan-nels[1] | channel | many channels | many channels |

1) channels indicate confluent canals essentially stretching from bottom to top of the cake.

These results indicate that acceptable pound cakes can be obtained wherein 25% of the margarine is replaced by a non-cereal vegetable ingredient as defined herein. Even at a fat replacement of 50%, reasonably acceptable cakes were obtained. However, when margarine was replaced in excess of 50% the resulting cakes became increasingly solid and the porousness of the crumb was less acceptable.

EXAMPLE 1B

Pound cakes wherein 75 wt% of the margarine content of a reference cake is replaced by a mixture of potato starch, potato fiber and water

Based on the assumption that the above less acceptable characteristics of cakes wherein margarine was replaced in excess of 50% by the potato ingredient might be ascribed to the fact that the relatively high water content of this ingredient, being about 80 wt%, at high replacement rates added an inappropriate amount of water not being sufficiently bound, a series of experiments were carried out in which 75 wt% of the margarine of the reference pound cake (300 g) were replaced by vegetable ingredients comprising dry potato starch, dry potato fiber and water, the dry matter content of the ingredients being 50 wt% or in one test product 17.5 wt%.

The composition of the tested vegetable ingredients are shown below:

| Ingredient No. | potato fiber, g | potato starch, g | water, g |
|---|---|---|---|
| 1 | 25 | 125 | 150 |
| 2 | 50 | 100 | 150 |
| 3 | 75 | 75 | 150 |
| 4 | 100 | 50 | 150 |
| 5 | 125 | 25 | 150 |
| 6 | 10 | 90 | 100 |
| 7 | 25 | 75 | 100 |
| 8 | 50 | 50 | 100 |
| 9 | 5 | 30 | 165 |

The characteristics of the above fat-reduced pound cakes were assessed as defined in Example 1A. The results are indicated in the below Table 2:

TABLE 2

Characteristics of pound cakes wherein 75 wt% of the margarine is replaced by a mixture of potato starch, potato fiber and water

| Cake with in-gredient No. | Aeration | Volume | Porous-ness | Texture |
|---|---|---|---|---|
| 1 | 870 g | 990 | many channels | solid |
| 2 | 936 g | 916 | – | – |
| 3 | 999 g | 831 | – | – |
| 4 | 1058 g | 720 | – | – |
| 5 | 1062 g | 670 | – | – |
| 6 | 768 g | 1020 | few channels | good |
| 7 | 784 g | 1005 | few channels | good |
| 8 | 797 g | 995 | few channels | good |
| 9 | 747 g | 1030 | few channels | good |

In cakes containing the vegetable ingredients Nos. 1-5 the colour was grayish whereas it in cakes containing ingredients Nos. 6-9 was indistinguishable from the colour of the reference product.

From the above results it can be concluded that pound cakes wherein 75 wt% of the conventionally used amount of fat ingredient may be replaced by a dry vegetable ingredient as defined above, without any significant losses of desired characteristics. However, when using a recipe as that of the present reference cake as the starting recipe, this replacement is preferably made by using a dry non-cereal vegetable ingredient in amounts which are less than 9.4 wt% of the batter. A highly acceptable pound cake containing only 6.25 wt% of margarine (about 5.0 wt% added fat) was obtained by adding a vegetable ingredient comprising dietary fiber and starch in a weight ratio in the range of 1:9 to 1:1 in an amount ranging from 2.2 to 6.25 wt%.

EXAMPLE 2A

Cookies wherein 25. 50, 75 and 90 wt%, respectively of the margarine of reference cookies containing 32.3 wt% margarine is replaced by pre-cooked potatoes

In this example cookies made according to the following dough recipe was used as the reference product:

| | |
|---|---|
| Wheat flour | 750 g |
| Icing sugar | 250 g |
| Whole, liquid eggs | 50 g |
| Margarine, 80 wt% fat | 500 g |

Using the above recipe containing 32.3 wt% of margarine (margarine:flour weight ratio 1:1.5) as the starting point, a series of cookie doughs were prepared wherein 25, 50, 75 and 90 wt%, respectively of the margarine was substituted with equivalent amounts of mashed boiled potatoes.

Accordingly, the test doughs had the following contents of margarine: 24.2, 16.2, 8.1 and 3.2 wt%, i.e. weight ratios between margarine content and flour content were 1:2, 1:3, 1:6 and 1:15, respectively.

The boiled potatoes were pre-comminuted to a particle size of about 2 mm by grinding twice by means of a meat grinder.

The ingredients for the reference cookies and the fat-reduced cookies were mixed and kneaded until a cookie dough was formed. The dough obtained from the reference recipe had a smooth and plastic texture. The dough resulting from the recipe in which 25 wt% margarine had been replaced had a similar desirable texture. With 50% replacement of margarine, the obtained dough had a somewhat firm and elastic texture and it was difficult to roll out. The same features were observed for doughs with 75 and 90 wt% fat replacement.

The dough was rolled out in a layer of 3.5 mm and round pieces of dough having a diameter of 67 mm were cut out and placed on a baking plate for baking in an oven at 220°C for about 10 minutes.

The characteristics of the baked cookies were assessed in accordance with procedures which are conventional in the art and the result hereof are summarized below:

## TABLE 3

Characteristics of cookies containing 32.3 wt% margarine and cookies
wherein 25, 50, 75 and 90 wt%, respectively of the margarine is
replaced by pre-cooked potatoes

| Charac-teristic | Degree of fat replacement | | | | |
|---|---|---|---|---|---|
| | 0 | 25% | 50% | 75% | 90% |
| Diameter, mm | 75 | 68 | 62 | 63 | 62 |
| Height, mm | 5.0 | 5.6 | 9.4 | 10.0 | 11 |
| Colour | good | good/pale | pale | pale | pale |
| Taste | good | good | dough-like | dough-like | dough-like |
| Texture | crisp | crisp | not crisp | tough | tough |

The above results indicate that acceptable cookies can be obtained wherein 25% of the margarine is replaced by a non-cereal vegetable ingredient which is a non-fractionated plant material having a water content of at least 70 wt%.

EXAMPLE 2B

Cookies wherein 50 wt% of the margarine of a reference cookie dough composition is replaced by a mixture of potato starch. potato fiber and water

Based on the assumption that the above less acceptable characteristics of cookies wherein margarine was replaced in excess of 25 wt% by the potato ingredient might be ascribed to the fact that the relatively high water content of this ingredient being about 80 wt% at high replacement rates adds an inappropriate amount of water not being sufficiently bound, a series of experiments were carried out in which 50 wt% of the margarine of the reference cookie dough was replaced by vegetable ingredients comprising dry potato starch and dry potato fiber, and 125 g of water.
The composition of the tested vegetable ingredients are shown below:

| Ingredient No. | potato fiber, g | potato starch, g | water, g |
|---|---|---|---|
| 1 | 12.5 | 112.5 | 125 |
| 2 | 12.5 | 212.5 | 125 |
| 3 | 12.5 | 312.5 | 125 |

The dry potato fiber and potato starch was added to the cookie dough in a proportion of 8.1 wt%, ingredient 2 in a proportion of 14.5 wt% and ingredient 3 in a proportion of 21.0 wt%. The weight ratios between the fiber and the starch component were 1:9, 1:17 and 1:25, respectively.

The process of making the cookies and the assessment of their characteristics were essentially as defined in Example 2A. Cookies containing ingredient 1 were tough and lacked the desired crispness. The size and appearance of cookies containing ingredients 2 or 3 were similar to the high-fat reference cookies. Furthermore, these fat-reduced cookies had a crispness and taste which was essentially of the same nature as those of the reference product.

Based on these experiments it can therefore be concluded that cookies may be obtained in which the content of margarine is reduced from 32.3 wt% to 16.1 wt% by replacing the fat by a vegetable ingredient according to the invention in amounts of 14.5 to 21.0 wt% of the dough.

EXAMPLE 2C

Cookies containing 8.7 wt% of margarine and 27.7 wt% of a mixture of potato starch, potato fiber and water

Cookies were made according to the following dough composition recipe:

```
Wheat flour              470.0 g
Icing sugar              250.0 g
Whole, liquid eggs        50.0 g
Margarine, 80 wt% fat    125.0 g
Skim milk powder          10.0 g
Salt                       3.0 g
Potato starch            384.0 g
Potato fiber              12.5 g
Water                    125.0 g

Total                   1429.5 g
```

The process of making the cookies and the assessment of their characteristics were essentially as defined in the above Example 2A.

The size and appearance of cookies made from the above composition containing 7.0 wt% fat deriving from the margarine and 27.7 wt% of a non-cereal vegetable ingredient comprising dietary fiber and starch in a weight ratio of 1:31.5 were similar to the high-fat reference cookies referred to in Example 2A. Furthermore, these fat-reduced cookies had a crispness and taste which was essentially of the same nature as those of the reference product.

## Claims

**Claims for the following Contracting States : AT, BE, CH, DE, DK, FR, GB, IT, LI, LU, NL, SE**

1. A dough or batter composition for use in making a non-bread fat-reduced bakery product selected from enriched sponge cakes, victoria cakes, high-ratio cakes, pound cakes, cookies containing at the most 20 wt% of sugar, biscuits, scones and muffins, having a fat content which is at the most 20 wt% when the bakery product to be made is a cookie or a biscuit and which is at the most 13 wt% when the bakery product to be made is a cake, the composition containing 1-40 wt% of a non-cereal vegetable ingredient comprising dietary fiber and digestible starch in a weight ratio which is in the range of 1:50 to 1:1, the proportion of the dietary fiber being at least 5 wt% of the vegetable ingredient dry matter when determined as non-starch polysaccharides (NSP), and the proportion of starch being at least 50 wt% of the vegetable ingredient dry matter, the composition containing less than 25 wt% cereal bran and having a ratio between the non-cereal vegetable ingredient dry matter and fat which is in the range of 1:19 to 4.5:1.

2. A composition according to claim 1 which is a composition for making a cookie or a biscuit, the composition having a fat content which is at the most 15 wt%.

3. A composition according to claim 2 wherein the fat content is at the most 10 wt%, preferably at the most 8 wt% and in particular less than 5 wt%.

4. A composition according to claim 1 which is a composition for making a cake, the composition having a fat content which is at the most 10 wt%, preferably at the most 8 wt%, more preferably at the most 5 wt% and in particular less than 3 wt%.

5. A composition according to claim 1 wherein the ratio between the non-cereal vegetable ingredient dry matter and fat is in the range of 1:3 to 1:1.

6. A composition according to claim 1 wherein the proportion of the non-cereal vegetable ingredient is in the range of 1.5-20 wt%.

7. A composition according to claim 1 wherein the vegetable ingredient comprises dietary fiber and starch in a weight ratio which is in the range of 1:32 to 1:1.

8. A composition according to claim 1 wherein the vegetable ingredient comprises dietary fiber and starch in a weight ratio which is in the range of 1:20 to 1:2, preferably in the range of 1:15 to 1:3 and most preferably in the range of 1:10 to 1:4.

9. A composition according to claim 1 wherein the dietary fiber of the vegetable ingredient is native dietary fiber.

10. A composition according to claim 1 wherein the starch of the vegetable ingredient is native starch.

11. A composition according to claim 1 wherein the starch of the vegetable ingredient is starch which in its native form comprises granules having an average size of their largest diameter which is within the range of 20-200 μm.

12. A composition according to claim 1 wherein the proportion of dietary fiber in the vegetable ingredient dry matter is at least 10 wt%.

13. A composition according to claim 12 wherein the proportion of dietary fiber in the vegetable ingredient dry matter is at least 15 wt%.

14. A composition according to claim 1 wherein the vegetable ingredient is a native non-fractionated plant material having a natural water content of at least 70 wt%.

15. A composition according to claim 14 wherein the vegetable ingredient is selected from plant tuber materials and plant root materials.

16. A composition according to claim 15 wherein the plant tuber material is potatoes.

17. A composition according to claim 15 wherein the plant root material is selected from tapioca roots, cassava roots and arrowroots.

18. A composition according to claim 14 wherein the vegetable ingredient is pre-cooked.

19. A composition according to claim 1 wherein the vegetable ingredient has an inherent water content of at the most 20 wt%.

20. A composition according to claim 1 wherein the vegetable ingredient is a mixture of a separated starch component and a separated dietary fiber component.

21. A composition according to claim 20 wherein the separated starch component is selected from potato starch and tapioca starch.

22. A composition according claim 20 wherein the separated dietary fiber component is selected from potato dietary fiber, potato pulp, beet fiber, pea fiber and bean fiber.

23. A composition according to claim 1 wherein the vegetable ingredient is obtained by supplementing a native non-fractionated plant material of which the dry matter proportion of dietary fiber is less than 5 wt% with an amount of non-cereal, separated dietary fiber which results in a proportion of non-cereal dietary fiber of at least 5 wt%.

24. A composition according to claim 1 wherein the vegetable ingredient is obtained by supplementing a native non-fractionated plant material of which the dry matter proportion of starch is less than 50 wt% with an amount of non-cereal, separated starch which results in a proportion of non-cereal starch of at least 50 wt%.

25. A composition according to claim 1 which comprises a leavening agent.

26. A composition according to claim 25 wherein the leavening agent is a chemical leavening agent.

27. A composition according to claim 1 which comprises an emulsifying agent.

28. A process for making a fat-reduced bakery product selected from enriched sponge cakes, victoria cakes, high-ratio cakes, pound cakes, cookies containing at the most 20 wt% of sugar, biscuits, scones and muffins, the process comprising
    (1) preparing a dough or batter composition having a fat content which is at the most 20 wt% when the bakery product to be made is a cookie or a biscuit and which is at the most 13 wt% when the bakery product to be made is a cake, the composition containing 1-40 wt% of a non-cereal vegetable ingredient comprising dietary fiber and digestible starch in a weight ratio which is in the range of 1:50 to 1:1, the proportion of the dietary fiber being at least 5 wt% of the vegetable ingredient dry matter when determined as non-starch polysaccharides (NSP), and the proportion of starch being at least 50 wt% of the vegetable ingredient dry matter, the composition containing less than 25 wt% cereal bran and having a ratio between the non-cereal vegetable ingredient dry matter and fat which is in the range of 1:19 to 4.5:1, to obtain a dough or a batter,
    (2) optionally dividing the dough or the batter into suitable portions, and
    (3) baking the dough or batter,
    to obtain the fat-reduced bakery product.

29. A process according to claim 28 wherein the composition is a composition for making a cookie or a biscuit and having a fat content which is at the most 15 wt%.

30. A process according to claim 29 wherein the composition is a composition having a fat content which is at the most 10 wt%, preferably at the most 8 wt% and in particular less than 5 wt%.

31. A process according to claim 28 wherein the composition is a composition for making a cake and having a fat content which is at the most 10 wt%, preferably at the most 8 wt%, more preferably at the most 5 wt% and in particular less than 3 wt%.

32. A process according to claim 28 wherein the ratio between the non-cereal vegetable ingredient dry matter and fat in the dough or batter composition is in the range of 1:3 to 1:1.

33. A process according to claim 28 wherein the dough or batter composition is a composition for making a non-bread bakery product wherein the proportion of the non-cereal vegetable ingredient is in the range of 1.5-20 wt%.

34. A process according to claim 28 wherein the vegetable ingredient comprises dietary fiber and starch in a weight ratio which is in the range of 1:32 to 1:1.

35. A process according to claim 34 wherein the non-cereal vegetable ingredient of the dough or batter composition comprises dietary fiber and starch in a weight ratio which is in the range of 1:20 to 1:2, preferably in the range of 1:15 to 1:3 and most preferably in the range of 1:10 to 1:4.

36. A process according to claim 28 wherein the dietary fiber of the vegetable ingredient is native dietary fiber.

37. A process according to claim 28 wherein the starch of the vegetable ingredient is native starch.

38. A process according to claim 28 wherein the starch of the vegetable ingredient is starch which in its native form comprises granules having an average size of their largest diameter which is within the range of 20-200 μm.

39. A process according to claim 28 wherein the proportion of dietary fiber in the vegetable ingredient dry matter is at least 10 wt%.

40. A process according to claim 39 wherein the proportion of dietary fiber in the vegetable ingredient dry matter is at least 15 wt%.

41. A process according to claim 28 wherein the vegetable ingredient is a native non-fractionated plant material having a natural water content of at least 70 wt%.

42. A process according to claim 40 wherein the vegetable ingredient is selected from plant tuber materials and plant root materials.

43. A process according to claim 42 wherein the plant tuber material is potatoes.

44. A process according to claim 42 wherein the plant root material is selected from tapioca roots, cassava roots and arrowroots.

45. A process according to claim 41 wherein the vegetable ingredient is pre-cooked.

46. A process according to claim 28 wherein the vegetable ingredient has an inherent water content of at the most 20 wt%.

47. A process according to claim 28 wherein the vegetable ingredient is a mixture of a separated starch component and a separated dietary fiber component.

48. A process according to claim 47 wherein the separated starch component is selected from potato starch and tapioca starch.

49. A process according to claim 47 wherein the separated dietary fiber component is selected from potato dietary fiber, potato pulp, beet fiber, pea fiber and bean fiber.

50. A process according to claim 28 wherein the vegetable ingredient is obtained by supplementing a native non-fractionated plant material of which the dry matter proportion of dietary fiber is less than 5 wt% with an amount of non-cereal, separated dietary fiber which results in a proportion of non-cereal dietary fiber of at least 5 wt%.

51. A process according to claim 28 wherein the vegetable ingredient is obtained by supplementing a native non-fractionated plant material of which the dry matter proportion of starch is less than 50 wt% with an amount of non-cereal, separated starch which results in a proportion of non-cereal starch of at least 50 wt%.

52. A process according to claim 28 wherein the composition comprises a leavening agent.

53. A process according to claim 52 wherein the leavening agent is a chemical leavening agent.

54. A process according to claim 28 wherein the composition comprises an emulsifying agent.

55. A bakery product obtainable by a process as defined in any of claims 28-54.

56. A bakery product according to claim 55 which is a cookie made from a dough composition having a fat content which is at the most 15 wt%.

57. A bakery product according to claim 56 which is a cookie made from a dough composition consisting of

| | |
|---|---|
| Wheat flour | 41.9 wt% |
| Icing sugar | 16.1 wt% |

| Whole egg | 3.2 wt% |
|---|---|
| Margarine, 80 wt% fat | 16.1 wt% |
| Potato fiber | 0.8 wt% |
| Potato starch | 13.7 wt% |
| Water | 8.1 wt% |

58. A bakery product according to claim 55 which is a cookie made from a dough composition having a fat content which is at the most 8 wt%.

59. A bakery product according to claim 58 which is a cookie made from a dough composition consisting of

| Wheat flour | 32.9 wt% |
|---|---|
| Icing sugar | 17.5 wt% |
| Whole egg | 3.5 wt% |
| Margarine, 80 wt% fat | 8.7 wt% |
| Potato fiber | 0.9 wt% |
| Potato starch | 26.9 wt% |
| Water | 8.7 wt% |

60. A bakery product according to claim 55 which is a pound cake made from a batter composition having a fat content which is at the most 13 wt%.

61. A bakery product according to claim 60 which is a pound cake made from a batter composition comprising

| Wheat flour | 25.0 wt% |
|---|---|
| Starch | 1.0 wt% |
| Sugar | 19.3 wt% |
| Baking powder | 0.8 wt% |
| Polyglycerol ester | 0.3 wt% |
| Vanilla flavour | qs |
| Whole egg | 25.0 wt% |
| Margarine, 80 wt% fat | 12.5 wt% |
| Pre-cooked, comminuted potatoes | 12.5 wt% |

62. A bakery product according to claim 55 which is a pound cake made from a batter composition having a fat content which is at the most 8 wt%.

63. A bakery product according to claim 62 which is a pound cake made from a batter composition consisting of

| Wheat flour | 25.0 wt% |
|---|---|
| Starch | 1.0 wt% |
| Sugar | 19.3 wt% |
| Baking powder | 0.8 wt% |
| Polyglycerol ester | 0.3 wt% |
| Sorbitol, salt, milk powder | 3.8 wt% |
| Vanilla flavour | qs |
| Whole egg | 25.0 wt% |
| Margarine, 80 wt% fat | 6.3 wt% |
| Potato fiber and potato starch | 6.3 wt% |
| Water | 6.3 wt% |

18

**Claims for the following Contracting States : GR, ES**

1. A process for preparing a dough or batter composition for use in making a non-bread fat-reduced bakery product selected from enriched sponge cakes, victoria cakes, high-ratio cakes, pound cakes, cookies containing at the most 20 wt% of sugar, biscuits, scones and muffins, having a fat content which is at the most 20 wt% when the bakery product to be made is a cookie or a biscuit and which is at the most 13 wt% when the bakery product to be made is a cake, the composition containing 1-40 wt% of a non-cereal vegetable ingredient comprising dietary fiber and digestible starch in a weight ratio which is in the range of 1:50 to 1:1, the proportion of the dietary fiber being at least 5 wt% of the vegetable ingredient dry matter when determined as non-starch polysaccharides (NSP), and the proportion of starch being at least 50 wt% of the vegetable ingredient dry matter,
the composition containing less than 25 wt% cereal bran and having a ratio between the non-cereal vegetable ingredient dry matter and fat which is in the range of 1:19 to 4.5:1.

2. A process according to claim 1 wherein the composition is a composition for making a cookie or a biscuit, the composition having a fat content which is at the most 15 wt%.

3. A process according to claim 2 wherein the fat content is at the most 10 wt%, preferably at the most 8 wt% and in particular less than 5 wt%.

4. A process according to claim 1 wherein the composition is a composition for making a cake, the composition having a fat content which is at the most 10 wt%, preferably at the most 8 wt%, more preferably at the most 5 wt% and in particular less than 3 wt%.

5. A process according to claim 1 wherein the ratio between the non-cereal vegetable ingredient dry matter and fat is in the range of 1:3 to 1:1.

6. A process according to claim 1 wherein the proportion of the non-cereal vegetable ingredient is in the range of 1.5-20 wt%.

7. A process according to claim 1 wherein the vegetable ingredient comprises dietary fiber and starch in a weight ratio which is in the range of 1:32 to 1:1.

8. A process according to claim 1 wherein the vegetable ingredient comprises dietary fiber and starch in a weight ratio which is in the range of 1:20 to 1:2, preferably in the range of 1:15 to 1:3 and most preferably in the range of 1:10 to 1:4.

9. A process according to claim 1 wherein the dietary fiber of the vegetable ingredient is native dietary fiber.

10. A process according to claim 1 wherein the starch of the vegetable ingredient is native starch.

11. A process according to claim 1 wherein the starch of the vegetable ingredient is starch which in its native form comprises granules having an average size of their largest diameter which is within the range of 20-200 μm.

12. A process according to claim 1 wherein the proportion of dietary fiber in the vegetable ingredient dry matter is at least 10 wt%.

13. A process according to claim 12 wherein the proportion of dietary fiber in the vegetable ingredient dry matter is at least 15 wt%.

14. A process according to claim 1 wherein the vegetable ingredient is a native non-fractionated plant material having a natural water content of at least 70 wt%.

15. A process according to claim 14 wherein the vegetable ingredient is selected from plant tuber materials and plant root materials.

16. A process according to claim 15 wherein the plant tuber material is potatoes.

17. A process according to claim 15 wherein the plant root material is selected from tapioca roots, cassava

19

roots and arrowroots.

18. A process according to claim 14 wherein the vegetable ingredient is pre-cooked.

19. A process according to claim 1 wherein the vegetable ingredient has an inherent water content of at the most 20 wt%.

20. A process according to claim 1 wherein the vegetable ingredient is a mixture of a separated starch component and a separated dietary fiber component.

21. A process according to claim 20 wherein the separated starch component is selected from potato starch and tapioca starch.

22. A process according claim 20 wherein the separated dietary fiber component is selected from potato dietary fiber, potato pulp, beet fiber, pea fiber and bean fiber.

23. A process according to claim 1 wherein the vegetable ingredient is obtained by supplementing a native non-fractionated plant material of which the dry matter proportion of dietary fiber is less than 5 wt% with an amount of non-cereal, separated dietary fiber which results in a proportion of non-cereal dietary fiber of at least 5 wt%.

24. A process according to claim 1 wherein the vegetable ingredient is obtained by supplementing a native non-fractionated plant material of which the dry matter proportion of starch is less than 50 wt% with an amount of non-cereal, separated starch which results in a proportion of non-cereal starch of at least 50 wt%.

25. A process according to claim 1 wherein the composition comprises a leavening agent.

26. A composition according to claim 25 wherein the leavening agent is a chemical leavening agent.

27. A process according to claim 1 wherein the composition comprises an emulsifying agent.

28. A process for making a fat-reduced bakery product selected from enriched sponge cakes, victoria cakes, high-ratio cakes, pound cakes, cookies containing at the most 20 wt% of sugar, biscuits, scones and muffins, the process comprising

(1) preparing a dough or batter composition having a fat content which is at the most 20 wt% when the bakery product to be made is a cookie or a biscuit and which is at the most 13 wt% when the bakery product to be made is a cake, the composition containing 1-40 wt% of a non-cereal vegetable ingredient comprising dietary fiber and digestible starch in a weight ratio which is in the range of 1:50 to 1:1, the proportion of the dietary fiber being at least 5 wt% of the vegetable ingredient dry matter when determined as non-starch polysaccharides (NSP), and the proportion of starch being at least 50 wt% of the vegetable ingredient dry matter, the composition containing less than 25 wt% cereal bran and having a ratio between the non-cereal vegetable ingredient dry matter and fat which is in the range of 1:19 to 4.5:1, to obtain a dough or a batter,

(2) optionally dividing the dough or the batter into suitable portions, and

(3) baking the dough or batter,

to obtain the fat-reduced bakery product.

29. A process according to claim 28 wherein the composition is a composition for making a cookie or a biscuit and having a fat content which is at the most 15 wt%.

30. A process according to claim 29 wherein the composition is a composition having a fat content which is at the most 10 wt%, preferably at the most 8 wt% and in particular less than 5 wt%.

31. A process according to claim 28 wherein the composition is a composition for making a cake and having a fat content which is at the most 10 wt%, preferably at the most 8 wt%, more preferably at the most 5 wt% and in particular less than 3 wt%.

32. A process according to claim 28 wherein the ratio between the non-cereal vegetable ingredient dry matter and fat in the dough or batter composition is in the range of 1:3 to 1:1.

33. A process according to claim 28 wherein the dough or batter composition is a composition for making a non-bread bakery product wherein the proportion of the non-cereal vegetable ingredient is in the range of 1.5-20 wt%.

34. A process according to claim 28 wherein the vegetable ingredient comprises dietary fiber and starch in a weight ratio which is in the range of 1:32 to 1:1.

35. A process according to claim 34 wherein the non-cereal vegetable ingredient of the dough or batter composition comprises dietary fiber and starch in a weight ratio which is in the range of 1:20 to 1:2, preferably in the range of 1:15 to 1:3 and most preferably in the range of 1:10 to 1:4.

36. A process according to claim 28 wherein the dietary fiber of the vegetable ingredient is native dietary fiber.

37. A process according to claim 28 wherein the starch of the vegetable ingredient is native starch.

38. A process according to claim 28 wherein the starch of the vegetable ingredient is starch which in its native form comprises granules having an average size of their largest diameter which is within the range of 20-200 μm.

39. A process according to claim 28 wherein the proportion of dietary fiber in the vegetable ingredient dry matter is at least 10 wt%.

40. A process according to claim 39 wherein the proportion of dietary fiber in the vegetable ingredient dry matter is at least 15 wt%.

41. A process according to claim 28 wherein the vegetable ingredient is a native non-fractionated plant material having a natural water content of at least 70 wt%.

42. A process according to claim 40 wherein the vegetable ingredient is selected from plant tuber materials and plant root materials.

43. A process according to claim 42 wherein the plant tuber material is potatoes.

44. A process according to claim 42 wherein the plant root material is selected from tapioca roots, cassava roots and arrowroots.

45. A process according to claim 41 wherein the vegetable ingredient is pre-cooked.

46. A process according to claim 28 wherein the vegetable ingredient has an inherent water content of at the most 20 wt%.

47. A process according to claim 28 wherein the vegetable ingredient is a mixture of a separated starch component and a separated dietary fiber component.

48. A process according to claim 47 wherein the separated starch component is selected from potato starch and tapioca starch.

49. A process according to claim 47 wherein the separated dietary fiber component is selected from potato dietary fiber, potato pulp, beet fiber, pea fiber and bean fiber.

50. A process according to claim 28 wherein the vegetable ingredient is obtained by supplementing a native non-fractionated plant material of which the dry matter proportion of dietary fiber is less than 5 wt% with an amount of non-cereal, separated dietary fiber which results in a proportion of non-cereal dietary fiber of at least 5 wt%.

51. A process according to claim 28 wherein the vegetable ingredient is obtained by supplementing a native non-fractionated plant material of which the dry matter proportion of starch is less than 50 wt% with an amount of non-cereal, separated starch which results in a proportion of non-cereal starch of at least 50 wt%.

52. A process according to claim 28 wherein the composition comprises a leavening agent.

53. A process according to claim 52 wherein the leavening agent is a chemical leavening agent.

54. A process according to claim 28 wherein the composition comprises an emulsifying agent.

55. A process according to claim 28 for making a bakery product which is a cookie made from a dough composition having a fat content which is at the most 15 wt%.

56. A process according to claim 55 wherein the cookie is made from a dough composition consisting of

| | |
|---|---|
| Wheat flour | 41.9 wt% |
| Icing sugar | 16.1 wt% |
| Whole egg | 3.2 wt% |
| Margarine, 80 wt% fat | 16.1 wt% |
| Potato fiber | 0.8 wt% |
| Potato starch | 13.7 wt% |
| Water | 8.1 wt% |

57. A process according to claim 55 wherein the cookie is made from a dough composition having a fat content which is at the most 8 wt%.

58. A process according to claim 57 wherein the cookie is made from a dough composition consisting of

| | |
|---|---|
| Wheat flour | 32.9 wt% |
| Icing sugar | 17.5 wt% |
| Whole egg | 3.5 wt% |
| Margarine, 80 wt% fat | 8.7 wt% |
| Potato fiber | 0.9 wt% |
| Potato starch | 26.9 wt% |
| Water | 8.7 wt% |

59. A process according to claim 28 for making a pound cake made from a batter composition having a fat content which is at the most 13 wt%.

60. A process according to claim 59 wherein the pound cake is made from a batter composition comprising

| | |
|---|---|
| Wheat flour | 25.0 wt% |
| Starch | 1.0 wt% |
| Sugar | 19.3 wt% |
| Baking powder | 0.8 wt% |
| Polyglycerol ester | 0.3 wt% |
| Vanilla flavour | qs |
| Whole egg | 25.0 wt% |
| Margarine, 80 wt% fat | 12.5 wt% |
| Pre-cooked, comminuted potatoes | 12.5 wt% |

61. A process according to claim 59 wherein the pound cake is made from a batter composition having a fat content which is at the most 8 wt%.

62. A process according to claim 61 wherein the pound cake is made from a batter composition consisting of

| | |
|---|---|
| Wheat flour | 25.0 wt% |
| Starch | 1.0 wt% |
| Sugar | 19.3 wt% |
| Baking powder | 0.8 wt% |
| Polyglycerol ester | 0.3 wt% |
| Sorbitol, salt, milk powder | 3.8 wt% |

| | |
|---|---|
| Vanilla flavour | qs |
| Whole egg | 25.0 wt% |
| Margarine, 80 wt% fat | 6.3 wt% |
| Potato fiber and potato starch | 6.3 wt% |
| Water | 6.3 wt% |

**Patentansprüche**

**Patentansprüche für folgende Vertragsstaaten : AT, BE, CH, DE, DK, FR, GB, IT, LI, LU, NL, SE**

1. Teig- oder Rührteigzusammensetzung zur Verwendung bei der Herstellung einer fettreduzierten Nicht-Brot-Backware, ausgewählt aus verbesserten Sandkuchen (enriched sponge cakes), Viktoria-Kuchen (victoria cakes), "High-ratio cakes", "Pound cakes", höchstens 20 Gew.% Zucker enthaltenden Plätzchen, Kekse, Scones und Muffins, mit einem Fettgehalt von höchstens 20 Gew.%, falls die herzustellende Backware ein Plätzchen oder ein Keks ist, und höchstens 13 Gew.%, wenn die herzustellende Backware ein Kuchen ist; die Zusammensetzung enthält 1 bis 40 Gew.% einer pflanzlichen Nicht-Getreide-Zutat, umfassend diätetische Fasern und verdauliche Stärke in einem Gewichtsverhältnis, das im Bereich von 1:50 bis 1:1 liegt, wobei der Anteil der diätetischen Faser wenigstens 5 Gew.% der Trockenmasse der pflanzlichen Zutat, bestimmt als Nicht-Stärke-Polysaccharide (NSP) beträgt und der Anteil an Stärke wenigstens 50 Gew.% der Trockenmasse der pflanzlichen Zutat beträgt und die Zusammensetzung weniger als 25 Gew.% Getreidekleie enthält und ein Verhältnis von der Trockenmasse der pflanzlichen Nicht-Getreide-Zutat zu Fett im Bereich von 1:19 bis 4,5:1 hat.

2. Zusammensetzung gemäss Anspruch 1, die eine Zusammensetzung zur Herstellung von Plätzchen oder Keksen ist und die Zusammensetzung einen Fettgehalt von höchstens 15 Gew.% hat.

3. Zusammensetzung gemäss Anspruch 2 mit einem Fettgehalt von höchstens 10 Gew.%, bevorzugt höchstens 8 Gew.%, und insbesondere weniger als 5 Gew.%.

4. Zusammensetzung gemäss Anspruch 1, die eine Zusammensetzung zur Herstellung von Kuchen ist, wobei die Zusammensetzung einen Fettgehalt von höchstens 10 Gew.%, bevorzugt höchstens 8 Gew.%, und besonders bevorzugt höchstens 5 Gew.%, und insbesondere weniger als 3 Gew.%, hat.

5. Zusammensetzung gemäss Anspruch 1, bei der das Verhältnis der Trockenmasse der pflanzlichen Nicht-Getreide-Zutat zu Fett im Bereich von 1:3 bis 1:1 liegt.

6. Zusammensetzung gemäss Anspruch 1, bei der der Anteil an pflanzlicher Nicht-Getreide-Zutat im Bereich von 1,5 bis 20 Gew.% liegt.

7. Zusammensetzung gemäss Anspruch 1, bei der die pflanzliche Zutat diätetische Fasern und Stärke in einem Gewichtsverhältnis im Bereich von 1:32 bis 1:1 umfasst.

8. Zusammensetzung gemäss Anspruch 1, bei der die pflanzliche Zutat diätetische Fasern und Stärke in einem Gewichtsverhältnis im Bereich von 1:20 bis 1:2, bevorzugt im Bereich von 1:15 bis 1:3, und ganz besonders bevorzugt im Bereich von 1:10 bis 1:4, umfasst.

9. Zusammensetzung gemäss Anspruch 1, bei der die diätetische Faser der pflanzlichen Zutat eine natürliche diätetische Faser ist.

10. Zusammensetzung gemäss Anspruch 1, bei der die Stärke der pflanzlichen Zutat natürliche Stärke ist.

11. Zusammensetzung gemäss Anspruch 1, bei der die Stärke der pflanzlichen Zutat Stärke ist, die in ihrer natürlichen Form Körnchen mit einer durchschnittlichen Grösse des grössten Durchmessers im Bereich von 20 bis 200 $\mu$m umfasst.

12. Zusammensetzung gemäss Anspruch 1, bei der der Anteil an diätetischer Faser an der Trockenmasse der pflanzlichen Zutat wenigstens 10 Gew.% beträgt.

13. Zusammensetzung gemäss Anspruch 12, bei der der Anteil an diätetischer Faser an der Trockenmasse

EP 0 528 902 B1

der pflanzlichen Zutat wenigstens 15 Gew.% beträgt.

14. Zusammensetzung gemäss Anspruch 1, bei der die pflanzliche Zutat ein natürliches nichtfraktioniertes Pflanzenmaterial mit einem natürlichen Wassergehalt von wenigstens 70 Gew.% ist.

15. Zusammensetzung gemäss Anspruch 14, bei der die pflanzliche Zutat aus Pflanzenknollenmaterialien und Pflanzenwurzelmaterialien ausgewählt ist.

16. Zusammensetzung gemäss Anspruch 15, bei der das Pflanzenknollenmaterial Kartoffeln ist.

17. Zusammensetzung gemäss Anspruch 15, bei der das Pflanzenwurzelmaterial aus Tapiocawurzeln, Cassavawurzeln und Pfeilwurzeln ausgewählt ist.

18. Zusammensetzung gemäss Anspruch 14, bei der die pflanzliche Zutat vorgekocht ist.

19. Zusammensetzung gemäss Anspruch 1, bei der die pflanzliche Zutat einen inhärenten Wassergehalt von höchstens 20 Gew.% hat.

20. Zusammensetzung gemäss Anspruch 1, bei der die pflanzliche Zutat eine Mischung aus einer getrennten Stärkekomponente und einer getrennten diätetischen Faserkomponente ist.

21. Zusammensetzung gemäss Anspruch 20, bei der die getrennte Stärkekomponente aus Kartoffelstärke und Tapiocastärke ausgewählt ist.

22. Zusammensetzung gemäss Anspruch 20, bei der die getrennte diätetische Faserkomponente aus diätetischen Kartoffelfasern, Kartoffelfleisch, Rübenfasern, Erbsenfasern und Bohnenfasern ausgewählt ist.

23. Zusammensetzung gemäss Anspruch 1, bei der die pflanzlichen Zutat durch Versetzen des natürlichen, nicht-fraktionierten Pflanzenmaterials, dessen Trockenmassenanteil an diätetischer Faser weniger als 5 % ist, mit einer Menge an getrennter, diätetischer Nicht-Getreide Faser erhalten wird, wobei der Anteil an Nicht-Getreide-diätetischer Faser wenigstens 5 Gew.% beträgt.

24. Zusammensetzung gemäss Anspruch 1, bei der die pflanzliche Zutat durch Versetzen eines natürlichen, nicht-fraktionierten Pflanzenmaterials, dessen Trockenmassenanteil an Stärke weniger als 50 Gew.% beträgt, mit einer Menge an getrennter Nicht-Getreide Stärke erhalten wird, wobei der Anteil an Nicht-Getreide-Stärke wenigstens 50 Gew.% beträgt.

25. Zusammensetzung gemäss Anspruch 1, die ein Treibmittel umfasst.

26. Zusammensetzung gemäss Anspruch 25, wobei das Treibmittel ein chemisches Treibmittel ist.

27. Zusammensetzung gemäss Anspruch 1, die ein Emulsionsmittel umfasst.

28. Verfahren zur Herstellung einer fettreduzierten Backware, ausgewählt aus verbesserten Sandkuchen (enriched sponge cake), Viktoria-Kuchen (victoria cakes), "High ratio cakes", "Pound cakes", Plätzchen mit höchstens 20 Gew.% Zucker, Keksen, Scones und Muffins, umfassend:
(1) Herstellen einer Teig- oder Rührteigzusammensetzung mit einem Fettgehalt von höchstens 20 Gew.%, wenn die herzustellende Backware ein Plätzchen oder ein Keks ist, und höchstens 13 Gew.%, wenn die herzustellende Backware ein Kuchen ist, wobei die Zusammensetzung 1 bis 40 Gew.% einer pflanzlichen Nicht-Getreide-Zutat, umfassend diätetische Fasern und verdauliche Stärke in einem Gewichtsverhältnis im Bereich von 1:50 bis 1:1, der Anteil der diätetischen Faser an der Trockenmasse der pflanzlichen Zutat wenigstens 5 Gew.% beträgt, wenn dieser als Nicht-Stärke-Polysaccharide (NSP) bestimmt wird, und der Anteil der Stärke an der Trockenmasse der pflanzlichen Zutat wenigstens 50 Gew.% beträgt, wobei die Zusammensetzung weniger als 25 Gew.% Getreidekleie enthält und das Verhältnis der Trockenmasse der pflanzlichen Nicht-Getreide-Zutat zu Fett im Bereich von 1:19 bis 4,5:1 liegt, um einen Teig oder einen Rührteig zu erhalten;
(2) gewünschtenfalls Teilen des Teigs oder des Rührteigs in geeignete Portionen; und
(3) Backen des Teigs oder des Rührteigs, um die fettreduzierte Backware zu erhalten.

29. Verfahren gemäss Anspruch 28, bei dem die Zusammensetzung eine Zusammensetzung zur Herstellung

24

von Plätzchen oder Keksen ist und einen Fettgehalt von höchstens 15 Gew.% hat.

30. Verfahren gemäss Anspruch 29, bei dem die Zusammensetzung eine Zusammensetzung mit einem Fettgehalt von höchstens 10 Gew.%, bevorzugt höchstens 8 Gew.%, und insbesondere weniger als 5 Gew.%, ist.

31. Verfahren gemäss Anspruch 28, bei dem die Zusammensetzung eine Zusammensetzung zur Herstellung von Kuchen ist und einen Fettgehalt von höchstens 10 Gew.%, bevorzugt höchstens 8 Gew.%, und besonders bevorzugt höchstens 5 Gew.%, und insbesondere weniger als 3 Gew.%, hat.

32. Verfahren gemäss Anspruch 28, bei dem im Teig oder Rührteig das Verhältnis der Trockenmasse der pflanzlichen Nicht-Getreide-Zutat zu Fett im Bereich von 1:3 bis 1:1 liegt.

33. Verfahren gemäss Anspruch 28, bei dem der Teig oder Rührteig eine Zusammensetzung zur Herstellung einer Nicht-Brot-Backware ist, bei der der Anteil an pflanzlicher Nicht-Getreide-Zutat im Bereich von 1,5 bis 20 Gew.% liegt.

34. Verfahren gemäss Anspruch 28, bei dem die pflanzliche Zutat diätetische Fasern und Stärke in einem Gewichtsverhältnis im Bereich von 1:32 bis 1:1 umfasst.

35. Verfahren gemäss Anspruch 34, bei dem die pflanzliche Nicht-Getreide-Zutat des Teigs oder Rührteigs diätetische Fasern und Stärke in einem Gewichtsverhältnis im Bereich von 1:20 bis 1:2, bevorzugt im Bereich von 1:15 bis 1:3, und ganz besonders bevorzugt im Bereich von 1:10 bis 1:4, umfasst.

36. Verfahren gemäss Anspruch 28, bei dem die diätetische Faser der pflanzlichen Zutat eine natürliche diätetische Faser ist.

37. Verfahren gemäss Anspruch 28, bei dem die Stärke der pflanzlichen Zutat natürliche Stärke ist.

38. Verfahren gemäss Anspruch 28, bei dem die Stärke der pflanzlichen Zutat Stärke ist, die in ihrer natürlichen Form Körnchen mit einer durchschnittlichen Grösse des grössten Durchmessers im Bereich von 20 bis 200 μm umfasst.

39. Verfahren gemäss Anspruch 28, bei dem der Anteil an diätetischer Faser an der Trockenmasse der pflanzlichen Zutat wenigstens 10 Gew.% beträgt.

40. Verfahren gemäss Anspruch 39, bei dem der Anteil an diätetischer Faser an der Trockenmasse der pflanzlichen Zutat wenigstens 15 Gew.% beträgt.

41. Verfahren gemäss Anspruch 28, bei dem die pflanzliche Zutat ein natürliches nicht-fraktioniertes Pflanzenmaterial mit einem natürlichen Wassergehalt von wenigstens 70 Gew.% ist.

42. Verfahren gemäss Anspruch 40, bei dem die pflanzliche Zutat aus Pflanzenknollenmaterialien und Pflanzenwurzelmaterialien ausgewählt ist.

43. Verfahren gemäss Anspruch 42, bei dem das Pflanzenknollenmaterial Kartoffeln ist.

44. Verfahren gemäss Anspruch 42, bei dem das Pflanzenwurzelmaterial aus Tapiocawurzeln, Cassavawurzeln und Pfeilwurzeln ausgewählt ist.

45. Verfahren gemäss Anspruch 41, bei dem die pflanzliche Zutat vorgekocht ist.

46. Verfahren gemäss Anspruch 28, bei dem die pflanzliche Zutat einen inhärenten Wassergehalt von höchstens 20 Gew.% hat.

47. Verfahren gemäss Anspruch 28, bei dem die pflanzliche Zutat eine Mischung aus einer getrennten Stärkekomponente und einer getrennten diätetischen Faserkomponente ist.

48. Verfahren gemäss Anspruch 47, bei dem die getrennte Stärkekomponente aus Kartoffelstärke und Tapiocastärke ausgewählt ist.

**49.** Verfahren gemäss Anspruch 47, bei dem die getrennte diätetische Faserkomponente aus diätetischen Kartoffelfasern, Kartoffelfleisch, Rübenfasern, Erbsenfasern und Bohnenfasern ausgewählt ist.

**50.** Verfahren gemäss Anspruch 28, bei dem die pflanzliche Zutat durch Versetzen des natürlichen nicht-fraktionierten Pflanzenmaterials, dessen Trockenmassenanteil an diätetischer Faser weniger als 5 % ist, mit einer Menge an getrennter, diätetischer Nicht-Getreide Faser erhalten wird, wobei der Anteil an Nicht-Getreide-diätetischer Faser wenigstens 5 Gew.% beträgt.

**51.** Verfahren gemäss Anspruch 28, bei dem die pflanzliche Zutat durch Versetzen eines natürlichen, nicht-fraktionierten Pflanzenmaterials, dessen Trockenmassenanteil an Stärke weniger als 50 Gew.% beträgt, mit einer Menge an getrennter Nicht-Getreide Stärke erhalten wird, wobei der Anteil an Nicht-Getreide-Stärke wenigstens 50 Gew.% beträgt.

**52.** Verfahren gemäss Anspruch 28, bei dem die Zusammensetzung ein Treibmittel umfasst.

**53.** Verfahren gemäss Anspruch 52, bei dem das Treibmittel ein chemisches Treibmittel ist.

**54.** Verfahren gemäss Anspruch 28, bei dem die Zusammensetzung ein Emulsionsmittel umfasst.

**55.** Backware, erhältlich durch ein Verfahren gemäss einem der Ansprüche 28 bis 54.

**56.** Backware gemäss Anspruch 55, die ein Plätzchen, hergestellt aus einer Teigzusammensetzung mit einem Fettgehalt von höchstens 15 Gew.% ist.

**57.** Backware gemäss Anspruch 56, die ein Plätzchen, hergestellt aus einer Teigzusammensetzung ist, bestehend aus:

| | |
|---|---|
| Weizenmehl | 41,9 Gew.% |
| Puderzucker | 16,1 Gew.% |
| Ei | 3,2 Gew.% |
| Margarine, 80 Gew.% Fett | 16,1 Gew.% |
| Kartoffelfaser | 0,8 Gew.% |
| Kartoffelstärke | 13,7 Gew.% |
| Wasser | 8,1 Gew.% |

**58.** Backware gemäss Anspruch 55, die ein Plätzchen, hergestellt aus einer Teigzusammensetzung mit einem Fettgehalt von höchstens 8 Gew.% ist.

**59.** Backware gemäss Anspruch 58, die ein Plätzchen, hergestellt aus einer Teigzusammensetzung ist, bestehend aus:

| | |
|---|---|
| Weizenmehl | 32,9 Gew.% |
| Puderzucker | 17,5 Gew.% |
| Ei | 3,5 Gew.% |
| Margarine, 80 Gew.% Fett | 8,7 Gew.% |
| Kartoffelfaser | 0,9 Gew.% |
| Kartoffelstärke | 26,9 Gew.% |
| Wasser | 8,7 Gew.% |

**60.** Backware gemäss Anspruch 55, die ein "Pound cake", hergestellt aus einer Rührteigzusammensetzung mit einem Fettgehalt von höchstens 13 Gew.% ist.

**61.** Backware gemäss Anspruch 60, die ein "Pound cake" ist, hergestellt aus einer Rührteigzusammensetzung, umfassend:

| | |
|---|---|
| Weizenmehl | 25.0 Gew.% |
| Stärke | 1,0 Gew.% |
| Zucker | 19,3 Gew.% |
| Backpulver | 0,8 Gew.% |
| Polyglycerolester | 0,3 Gew.% |
| Vanillearoma | ausreichend |
| Ei | 25,0 Gew.% |
| Margarine, 80 Gew.% Fett | 12,5 Gew.% |
| vorgekochte, geriebene Kartoffeln | 12,5 Gew.% |

62. Backware gemäss Anspruch 55, die ein "Pound cake", hergestellt aus einer Rührteigzusammensetzung mit einem Fettgehalt von höchstens 8 Gew.% ist.

63. Backware gemäss Anspruch 62, die ein "Pound cake" ist, hergestellt aus einer Rührteigzusammensetzung, bestehend aus:

| | |
|---|---|
| Weizenmehl | 25,0 Gew.% |
| Stärke | 1,0 Gew.% |
| Zucker | 19,3 Gew.% |
| Backpulver | 0,8 Gew.% |
| Polyglycerolester | 0,3 Gew.% |
| Sorbitol, Salz, Milchpulver | 3,8 Gew.% |
| Vanillearoma | ausreichend |
| Ei | 25,0 Gew.% |
| Margarine, 80 Gew.% Fett | 6,3 Gew.% |
| Kartoffelfaser und Kartoffelstärke | 6,3 Gew.% |
| Wasser | 6,3 Gew.% |

**Patentansprüche für folgende Vertragsstaaten : GR, ES**

1. Verfahren zur Herstellung einer Teig- oder Rührteigzusammensetzung zur Verwendung bei der Herstellung einer fettreduzierten Nicht-Brot-Backware, ausgewählt aus verbesserten Sandkuchen (enriched sponge cakes), Viktoria-Kuchen (victoria cakes), "High-ratio cakes", "Pound cakes", höchstens 20 Gew.% Zucker enthaltenden Plätzchen, Kekse, Scones und Muffins, mit einem Fettgehalt von höchstens 20 Gew.%, falls die herzustellende Backware ein Plätzchen oder ein Keks ist, und höchstens 13 Gew.%, wenn die herzustellende Backware ein Kuchen ist; die Zusammensetzung enthält 1 bis 40 Gew.% einer pflanzlichen Nicht-Getreide-Zutat, umfassend diätetische Fasern und verdauliche Stärke in einem Gewichtsverhältnis, das im Bereich von 1:50 bis 1:1 liegt, wobei der Anteil der diätetischen Faser wenigstens 5 Gew.% der Trockenmasse der pflanzlichen Zutat, bestimmt als Nicht-Stärke-Polysaccharide (NSP) beträgt und der Anteil an Stärke wenigstens 50 Gew.% der Trockenmasse der pflanzlichen Zutat beträgt und die Zusammensetzung weniger als 25 Gew.% Getreidekleie enthält und ein Verhältnis von der Trockenmasse der pflanzlichen Nicht-Getreide-Zutat zu Fett im Bereich von 1:19 bis 4,5:1 hat.

2. Verfahren gemäss Anspruch 1, bei dem die Zusammensetzung eine Zusammensetzung zur Herstellung von Plätzchen oder Keksen ist und die Zusammensetzung einen Fettgehalt von höchstens 15 Gew.% hat.

27

3.  Verfahren gemäss Anspruch 2, bei dem der Fettgehalt höchstens 10 Gew.%, bevorzugt höchstens 8 Gew.%, und insbesondere weniger als 5 Gew.%, ist.

4.  Verfahren gemäss Anspruch 1, bei dem die Zusammensetzung eine Zusammensetzung zur Herstellung von Kuchen ist, wobei die Zusammensetzung einen Fettgehalt von höchstens 10 Gew.%, bevorzugt höchstens 8 Gew.%, und besonders bevorzugt höchstens 5 Gew.%, und insbesondere weniger als 3 Gew.%, hat.

5.  Verfahren gemäss Anspruch 1, bei dem das Verhältnis der Trockenmasse der pflanzlichen Nicht-Getreide-Zutat zu Fett im Bereich von 1:3 bis 1:1 liegt.

6.  Verfahren gemäss Anspruch 1, bei dem der Anteil an pflanzlicher Nicht-Getreide-Zutat im Bereich von 1,5 bis 20 Gew.% liegt.

7.  Verfahren gemäss Anspruch 1, bei dem die pflanzliche Zutat diätetische Fasern und Stärke in einem Gewichtsverhältnis im Bereich von 1:32 bis 1:1 umfasst.

8.  Verfahren gemäss Anspruch 1, bei dem die pflanzliche Zutat diätetische Fasern und Stärke in einem Gewichtsverhältnis im Bereich von 1:20 bis 1:2, bevorzugt im Bereich von 1:15 bis 1:3, und ganz besonders bevorzugt im Bereich von 1:10 bis 1:4, umfasst.

9.  Verfahren gemäss Anspruch 1, bei dem die diätetische Faser der pflanzlichen Zutat eine natürliche diätetische Faser ist.

10. Verfahren gemäss Anspruch 1, bei dem die Stärke der pflanzlichen Zutat natürliche Stärke ist.

11. Verfahren gemäss Anspruch 1, bei dem die Stärke der pflanzlichen Zutat Stärke ist, die in ihrer natürlichen Form Körnchen mit einer durchschnittlichen Grösse des grössten Durchmessers im Bereich von 20 bis 200 µm umfasst.

12. Verfahren gemäss Anspruch 1, bei dem der Anteil an diätetischer Faser an der Trockenmasse der pflanzlichen Zutat wenigstens 10 Gew.% beträgt.

13. Verfahren gemäss Anspruch 12, bei dem der Anteil an diätetischer Faser an der Trockenmasse der pflanzlichen Zutat wenigstens 15 Gew.% beträgt.

14. Verfahren gemäss Anspruch 1, bei dem die pflanzliche Zutat ein natürliches nicht-fraktioniertes Pflanzenmaterial mit einem natürlichen Wassergehalt von wenigstens 70 Gew.% ist.

15. Verfahren gemäss Anspruch 14, bei dem die pflanzliche Zutat aus Pflanzenknollenmaterialien und Pflanzenwurzelmaterialien ausgewählt ist.

16. Verfahren gemäss Anspruch 15, bei dem das Pflanzenknollenmaterial Kartoffeln ist.

17. Verfahren gemäss Anspruch 15, bei dem das Pflanzenwurzelmaterial aus Tapiocawurzeln, Cassavawurzeln und Pfeilwurzeln ausgewählt ist.

18. Verfahren gemäss Anspruch 14, bei dem die pflanzliche Zutat vorgekocht ist.

19. Verfahren gemäss Anspruch 1, bei dem die pflanzliche Zutat einen inhärenten Wassergehalt von höchstens 20 Gew.% hat.

20. Verfahren gemäss Anspruch 1, bei dem die pflanzliche Zutat eine Mischung aus einer getrennten Stärkekomponente und einer getrennten diätetischen Faserkomponente ist.

21. Verfahren gemäss Anspruch 20, bei dem die getrennte Stärkekomponente aus Kartoffelstärke und Tapiocastärke ausgewählt ist.

22. Verfahren gemäss Anspruch 20, bei dem die getrennte diätetische Faserkomponente aus diätetischen Kartoffelfasern, Kartoffelfleisch, Rübenfasern, Erbsenfasern und Bohnenfasern ausgewählt ist.

23. Verfahren gemäss Anspruch 1, bei dem die pflanzliche Zutat durch Versetzen des natürlichen nichtfraktionierten Pflanzenmaterials, dessen Trockenmassenanteil an diätetischer Faser weniger als 5 % ist, mit einer Menge an getrennter, diätetischer Nicht-Getreide Faser erhalten wird, wobei der Anteil an Nicht-Getreide-diätetischer Faser wenigstens 5 Gew.% beträgt.

24. Verfahren gemäss Anspruch 1, bei dem die pflanzliche Zutat durch Versetzen eines natürlichen, nicht-fraktionierten Pflanzenmaterials, dessen Trockenmassenanteil an Stärke weniger als 50 Gew.% beträgt, mit einer Menge an getrennter Nicht-Getreide Stärke erhalten wird, wobei der Anteil an Nicht-Getreide-Stärke wenigstens 50 Gew.% beträgt.

25. Verfahren gemäss Anspruch 1, bei dem die Zusammensetzung ein Treibmittel umfasst.

26. Verfahren gemäss Anspruch 25, bei dem das Treibmittel ein chemisches Treibmittel ist.

27. Verfahren gemäss Anspruch 1, bei dem die Zusammensetzung ein Emulsionsmittel umfasst.

28. Verfahren zur Herstellung einer fettreduzierten Backware, ausgewählt aus verbesserten Sandkuchen (enriched sponge cake), Viktoria-Kuchen (victoria cakes), "High ratio cakes", "Pound cakes", Plätzchen mit höchstens 20 Gew.% Zucker, Keksen, Scones und Muffins, umfassend:
    (1) Herstellen einer Teig- oder Rührteigzusammensetzung mit einem Fettgehalt von höchstens 20 Gew.%, wenn die herzustellende Backware ein Plätzchen oder ein Keks ist, und höchstens 13 Gew.%, wenn die herzustellende Backware ein Kuchen ist, wobei die Zusammensetzung 1 bis 40 Gew.% einer pflanzlichen Nicht-Getreide-Zutat, umfassend diätetische Fasern und verdauliche Stärke in einem Gewichtsverhältnis im Bereich von 1:50 bis 1:1, der Anteil der diätetischen Faser an der Trockenmasse der pflanzlichen Zutat wenigstens 5 Gew.% beträgt, wenn dieser als Nicht-Stärke-Polysaccharide (NSP) bestimmt wird, und der Anteil der Stärke an der Trockenmasse der pflanzlichen Zutat wenigstens 50 Gew.% beträgt, wobei die Zusammensetzung weniger als 25 Gew.% Getreidekleie enthält und das Verhältnis der Trockenmasse der pflanzlichen Nicht-Getreide-Zutat zu Fett im Bereich von 1:19 bis 4,5:1 liegt, um einen Teig oder einen Rührteig zu erhalten;
    (2) gewünschtenfalls Teilen des Teigs oder des Rührteigs in geeignete Portionen; und
    (3) Backen des Teigs oder des Rührteigs, um die fettreduzierte Backware zu erhalten.

29. Verfahren gemäss Anspruch 28, bei dem die Zusammensetzung eine Zusammensetzung zur Herstellung von Plätzchen oder Keksen ist und einen Fettgehalt von höchstens 15 Gew.% hat.

30. Verfahren gemäss Anspruch 29, bei dem die Zusammensetzung eine Zusammensetzung mit einem Fettgehalt von höchstens 10 Gew.%, bevorzugt höchstens 8 Gew.%, und insbesondere weniger als 5 Gew.%, ist.

31. Verfahren gemäss Anspruch 28, bei dem die Zusammensetzung eine Zusammensetzung zur Herstellung von Kuchen ist und einen Fettgehalt von höchstens 10 Gew.%, bevorzugt höchstens 8 Gew.%, und besonders bevorzugt höchstens 5 Gew.%, und insbesondere weniger als 3 Gew.%, hat.

32. Verfahren gemäss Anspruch 28, bei dem im Teig oder Rührteig das Verhältnis der Trockenmasse der pflanzlichen Nicht-Getreide-Zutat zu Fett im Bereich von 1:3 bis 1:1 liegt.

33. Verfahren gemäss Anspruch 28, bei dem der Teig oder Rührteig eine Zusammensetzung zur Herstellung einer Nicht-Brot-Backware ist, bei der der Anteil an pflanzlicher Nicht-Getreide-Zutat im Bereich von 1,5 bis 20 Gew.% liegt.

34. Verfahren gemäss Anspruch 28, bei dem die pflanzliche Zutat diätetische Fasern und Stärke in einem Gewichtsverhältnis im Bereich von 1:32 bis 1:1 umfasst.

35. Verfahren gemäss Anspruch 34, bei dem die pflanzliche Nicht-Getreide-Zutat des Teigs oder Rührteigs diätetische Fasern und Stärke in einem Gewichtsverhältnis im Bereich von 1:20 bis 1:2, bevorzugt im Bereich von 1:15 bis 1:3, und ganz besonders bevorzugt im Bereich von 1:10 bis 1:4, umfasst.

36. Verfahren gemäss Anspruch 28, bei dem die diätetische Faser der pflanzlichen Zutat eine natürliche diätetische Faser ist.

29

37. Verfahren gemäss Anspruch 28, bei dem die Stärke der pflanzlichen Zutat natürliche Stärke ist.

38. Verfahren gemäss Anspruch 28, bei dem die Stärke der pflanzlichen Zutat Stärke ist, die in ihrer natürlichen Form Körnchen mit einer durchschnittlichen Grösse des grössten Durchmessers im Bereich von 20 bis 200 μm umfasst.

39. Verfahren gemäss Anspruch 28, bei dem der Anteil an diätetischer Faser an der Trockenmasse der pflanzlichen Zutat wenigstens 10 Gew.% beträgt.

40. Verfahren gemäss Anspruch 39, bei dem der Anteil an diätetischer Faser an der Trockenmasse der pflanzlichen Zutat wenigstens 15 Gew.% beträgt.

41. Verfahren gemäss Anspruch 28, bei dem die pflanzliche Zutat ein natürliches nicht-fraktioniertes Pflanzenmaterial mit einem natürlichen Wassergehalt von wenigstens 70 Gew.% ist.

42. Verfahren gemäss Anspruch 40, bei dem die pflanzliche Zutat aus Pflanzenknollenmaterialien und Pflanzenwurzelmaterialien ausgewählt ist.

43. Verfahren gemäss Anspruch 42, bei dem das Pflanzenknollenmaterial Kartoffeln ist.

44. Verfahren gemäss Anspruch 42, bei dem das Pflanzenwurzelmaterial aus Tapiocawurzeln, Cassavawurzeln und Pfeilwurzeln ausgewählt ist.

45. Verfahren gemäss Anspruch 41, bei dem die pflanzliche Zutat vorgekocht ist.

46. Verfahren gemäss Anspruch 28, bei dem die pflanzliche Zutat einen inhärenten Wassergehalt von höchstens 20 Gew.% hat.

47. Verfahren gemäss Anspruch 28, bei dem die pflanzliche Zutat eine Mischung aus einer getrennten Stärkekomponente und einer getrennten diätetischen Faserkomponente ist.

48. Verfahren gemäss Anspruch 47, bei dem die getrennte Stärkekomponente aus Kartoffelstärke und Tapiocastärke ausgewählt ist.

49. Verfahren gemäss Anspruch 47, bei dem die getrennte diätetische Faserkomponente aus diätetischen Kartoffelfasern, Kartoffelfleisch, Rübenfasern, Erbsenfasern und Bohnenfasern ausgewählt ist.

50. Verfahren gemäss Anspruch 28, bei dem die pflanzliche Zutat durch Versetzen des natürlichen nichtfraktionierten Pflanzenmaterials, dessen Trockenmassenanteil an diätetischer Faser weniger als 5 % ist, mit einer Menge an getrennter, diätetischer Nicht-Getreide Faser erhalten wird, wobei der Anteil an Nicht-Getreide-diätetischer Faser wenigstens 5 Gew.% beträgt.

51. Verfahren gemäss Anspruch 28, bei dem die pflanzliche Zutat durch Versetzen eines natürlichen, nicht-fraktionierten Pflanzenmaterials, dessen Trockenmassenanteil an Stärke weniger als 50 Gew.% beträgt, mit einer Menge an getrennter Nicht-Getreide Stärke erhalten wird, wobei der Anteil an Nicht-Getreide-Stärke wenigstens 50 Gew.% beträgt.

52. Verfahren gemäss Anspruch 28, bei dem die Zusammensetzung ein Treibmittel umfasst.

53. Verfahren gemäss Anspruch 52, bei dem das Treibmittel ein chemisches Treibmittel ist.

54. Verfahren gemäss Anspruch 28, bei dem die Zusammensetzung ein Emulsionsmittel umfasst.

55. Verfahren zur Herstellung einer Backware gemäss Anspruch 28, die ein Plätzchen, hergestellt aus einer Teigzusammensetzung mit einem Fettgehalt von höchstens 15 Gew.% ist.

56. Verfahren gemäss Anspruch 55 bei dem das Plätzchen, aus einer Teigzusammensetzung hergestellt wird, bestehend aus:

| | |
|---|---|
| Weizenmehl | 41,9 Gew.% |
| Puderzucker | 16,1 Gew.% |
| Ei | 3,2 Gew.% |

Margarine, 80 Gew.% Fett    16,1 Gew.%
Kartoffelfaser    0,8 Gew.%
Kartoffelstärke    13,7 Gew.%
Wasser    8,1 Gew.%

57. Verfahren gemäss Anspruch 55, bei dem das Plätzchen, aus einer Teigzusammensetzung mit einem Fettgehalt von höchstens 8 Gew.% hergestellt wird.

58. Verfahren gemäss Anspruch 57, bei dem das Plätzchen, aus einer Teigzusammensetzung hergestellt wird, bestehend aus:

Weizenmehl    32,9 Gew.%
Puderzucker    17,5 Gew.%
Ei    3,5 Gew.%
Margarine, 80 Gew.% Fett    8,7 Gew.%
Kartoffelfaser    0,9 Gew.%
Kartoffelstärke    26,9 Gew.%
Wasser    8,7 Gew.%

59. Verfahren gemäss Anspruch 28 zur Herstellung eines "Pound cake" aus einer Rührteigzusammensetzung mit einem Fettgehalt von höchstens 13 Gew.%.

60. Verfahren gemäss Anspruch 59, bei dem der "Pound cake" aus einer Rührteigzusammensetzung hergestellt wird, umfassend:

```
Weizenmehl                            25.0 Gew.%

Stärke                                 1,0 Gew.%

Zucker                                19,3 Gew.%

Backpulver                             0,8 Gew.%

Polyglycerolester                      0,3 Gew.%


Vanillearoma                          ausreichend

Ei                                    25,0 Gew.%

Margarine, 80 Gew.% Fett              12,5 Gew.%

vorgekochte, geriebene Kartoffeln 12,5 Gew.%
```

61. Verfahren gemäss Anspruch 59, bei dem der "Pound cake" aus einer Rührteigzusammensetzung mit einem Fettgehalt von höchstens 8 Gew.% hergestellt wird.

62. Verfahren gemäss Anspruch 61, bei dem der "Pound cake" aus einer Rührteigzusammensetzung hergestellt wird, bestehend aus:

| | |
|---|---|
| Weizenmehl | 25,0 Gew.% |
| Stärke | 1,0 Gew.% |
| Zucker | 19,3 Gew.% |
| Backpulver | 0,8 Gew.% |
| Polyglycerolester | 0,3 Gew.% |
| Sorbitol, Salz, Milchpulver | 3,8 Gew.% |
| Vanillearoma | ausreichend |
| Ei | 25,0 Gew.% |
| Margarine, 80 Gew.% Fett | 6,3 Gew.% |
| Kartoffelfaser und Kartoffelstärke | 6,3 Gew.% |
| Wasser | 6,3 Gew.% |

**Revendications**

**Revendications pour les Etats contractants suivants : AT, BE, CH, DE, DK, FR, GB, IT, LI, LU, NL, SE**

1. Composition de pâte à pétrir ou à frire pour utilisation dans la production de produits de boulangerie autres que le pain à teneur en graisse réduite, choisis parmi les gâteaux de Savoie enrichis, les gâteaux victoria, les "high ratio cakes", les "pound cakes", les cookies contenant au maximum 20% en poids de sucre, les biscuits, les scones et les muffins, présentant une teneur en matière grasse ne dépassant pas 20% en poids quand le produit de boulangerie qu'on doit préparer est un cookie ou un biscuit et qui est au maximum de 13% en poids quand le produit de boulangerie à préparer est un gâteau, la composition contenant de 1 à 40% en poids d'un ingrédient végétal non céréal comprenant des fibres diététiques et un amidon digeste dans un rapport pondéral compris entre 1:50 et 1:1, la proportion des fibres diététiques comprenant au moins 5% en poids de la matière sèche de l'ingrédient végétal qu'on détermine sous forme de polysaccharides non amylacés (PNA), et la proportion d'amidon étant d'au moins 50% en poids de la matière sèche de l'ingrédient végétal, la composition contenant moins de 25% en poids de son et présentant un rapport entre la matière sèche de l'ingrédient végétal non céréal et la graisse compris entre 1:19 et 4,5 : 1.

2. Composition selon la revendication 1, qui est destinée à préparer un cookie ou un biscuit, la composition ayant une teneur en graisse ne dépassant pas 15% en poids.

3. Composition selon la revendication 2, dans laquelle la teneur en graisse ne dépasse pas 10% en poids, de préférence ne dépasse pas 8% en poids et, surtout est inférieure à 5% en poids.

4. Composition selon la revendication 1, qui est destinée à préparer un gâteau, la composition ayant une teneur en graisse qui est maximum de 10% en poids, de préférence au maximum de 8% en poids et, mieux encore, ne dépassant pas 5% en poids, surtout de moins de 3% en poids.

5. Composition selon la revendication 1, dans laquelle le rapport de l'ingrédient végétal non céréal (matière sèche) et la graisse est compris entre 1:3 et 1:1.

6. Composition selon la revendication 1, dans laquelle la proportion de l'ingrédient végétal non céréal est comprise entre 1,5 et 20% en poids.

7. Composition selon la revendication 1, dans laquelle l'ingrédient végétal comprend une fibre diététique et de l'amidon dans un rapport compris entre 1:32 et 1:1.

8. Composition selon la revendication 1, dans laquelle l'ingrédient végétal comprend la fibre diététique et l'amidon dans un rapport pondéral de 1:20 à 1:2, de préférence de 1:15 à 1:3 et, surtout, de 1:10 à 1:4.

9. Composition selon la revendication 1, dans laquelle la fibre diététique de l'ingrédient végétal est une fibre diététique naturelle.

10. Composition selon la revendication 1, dans laquelle l'amidon de l'ingrédient végétal est l'amidon naturel.

11. Composition selon la revendication 1, dans laquelle l'amidon de l'ingrédient végétal est un amidon qui, sous forme naturelle, comprend des granules ayant une grosseur moyenne de leur plus grand diamètre comprise entre 20 et 200 μm.

12. Composition selon la revendication 1, dans laquelle la proportion de la fibre diététique dans la matière sèche de l'ingrédient végétal est d'au moins 10% en poids.

13. Composition selon la revendication 12, dans laquelle la proportion de la fibre diététique dans la matière sèche de l'ingrédient végétal est d'au moins 15% en poids.

14. Composition selon la revendication 1, dans laquelle l'ingrédient végétal est une matière végétale naturelle non fractionnée ayant une teneur naturelle en eau d'au moins 70% en poids.

15. Composition selon la revendication 14, dans laquelle l'ingrédient végétal est choisi parmi les tubercules des plantes et les racines des plantes.

16. Composition selon la revendication 15, dans laquelle la tubercule des plantes est la pomme de terre.

17. Composition selon la revendication 15, dans laquelle les racines des plantes sont choisies parmi les racines de tapioca, les racines de manioc et les marantes.

18. Composition selon la revendication 14, dans laquelle l'ingrédient végétal est précuit.

19. Composition selon la revendication 1, dans laquelle l'ingrédient végétal présente une teneur inhérente en eau ne dépassant pas 20% en poids.

20. Composition selon la revendication 1, dans laquelle l'ingrédient végétal est un mélange du composant amylacé séparé et d'un composant séparé de fibres diététiques.

21. Composition selon la revendication 20, dans laquelle le composant amylacé séparé est l'amidon de pomme de terre ou l'amidon de tapioca.

22. Composition selon la revendication 20, dans laquelle le composant séparé de fibre diététique est la fibre diététique de pomme de terre, la pulpe de pomme de terre, la fibre de betterave, la fibre de pois ou la fibre de haricot.

23. Composition selon la revendication 1, dans laquelle on obtient l'ingrédient végétal en complétant une plante naturelle non fractionnée dont la proportion de matière sèche de fibre diététique est inférieure à 5% en poids avec une quantité de fibre diététique non céréale séparée donnant une proportion de fibre diététique non céréale d'au moins 5% en poids.

24. Composition selon la revendication 1, dans laquelle on obtient l'ingrédient végétal en complétant une plante naturelle non fractionnée dont la proportion de matière sèche d'amidon est inférieure à 50% en poids avec une quantité d'amidon séparé non céréal donnant une proportion d'amidon non céréal d'au moins 50% en poids.

25. Composition selon la revendication 1, qui comprend un agent de levage de la pâte.

26. Composition selon la revendication 25, dans laquelle l'agent de levage est un agent de levage chimique.

27. Composition selon la revendication 1, qui comprend un agent émulsifiant.

28. Procédé de préparation d'un produit de boulangerie à teneur en graisse réduite, choisi parmi les gâteaux de Savoie enrichis, les gâteaux victoria, les "high ratio cakes", les "pound cakes", les cookies contenant au maximum 20% en poids de sucre, les biscuits, les scones et les muffins, procédé qui consiste :

(1) à préparer une pâte à pétrir ou à frire ayant une teneur en matière grasse qui ne dépasse pas 20% en poids quand le produit de boulangerie à préparer est un cookie ou un biscuit et qui ne dépasse pas 13% en poids quand le produit de boulangerie est un gâteau, la composition contenant de 1 à 40% en poids d'un ingrédient végétal non céréal comprenant une fibre diététique et un amidon digeste en un rapport pondéral compris entre 1:50 et 1:1, la proportion de la fibre diététique étant d'au moins 5% en poids de l'ingrédient végétal (matière sèche) quand on la détermine comme des polysaccharides non amylacés (PNA) et la proportion d'amidon étant d'au moins 50% en poids de l'ingrédient végétal (matière sèche), la composition contenant moins de 25% en poids de son et présentant un rapport entre l'ingrédient végétal non céréal (matière sèche) et la graisse qui est compris entre 1:19 et 4,5:1, pour obtenir ainsi une pâte à pétrir ou à frire,

(2) à diviser facultativement la pâte à pétrir ou à frire en portions appropriées, et

(3) à cuire au four la pâte à pétrir ou à frire pour obtenir un produit de boulangerie à teneur réduite en matière grasse.

29. Procédé selon la revendication 28, dans lequel la composition est prévue pour production d'un cookie ou d'un biscuit et sa teneur en matière grasse ne dépasse pas 15% en poids.

30. Procédé selon la revendication 29, dans lequel la composition présente une teneur en matière grasse ne dépassant pas 10% en poids, de préférence ne dépassant pas 8% en poids et surtout, inférieure à 5% en poids.

31. Procédé selon la revendication 28, dans lequel la composition est destinée à faire des gâteaux et présente une teneur en matière grasse qui ne dépasse pas 10% en poids, de préférence ne dépasse pas 8% en poids, mieux ne dépasse pas 5% en poids et, surtout, est inférieure à 3% en poids.

32. Procédé selon la revendication 28, dans lequel le rapport entre la matière sèche de l'ingrédient végétal non céréal et la graisse dans la pâte à pétrir ou à frire est compris entre 1:3 et 1:1.

33. Procédé selon la revendication 28, dans lequel la composition de pâte à pétrir ou à frire est destinée à la préparation d'un produit de boulangerie autre que le pain, la proportion de l'ingrédient végétal non céréal étant comprise entre 1,5 et 20% en poids.

34. Procédé selon la revendication 28, dans lequel l'ingrédient végétal comprend des fibres diététiques et de l'amidon dans un rapport pondéral de 1:32 à 1:1.

35. Procédé selon la revendication 34, dans lequel l'ngrédient végétal non céréal de la pâte à pétrir ou à frire comprend des fibres diététiques et de l'amidon dans un rapport pondéral de 1:20 à 1:2, de préférence de 1:15 à 1:3 et, surtout, de 1:10 à 1:4.

36. Procédé selon la revendication 28, dans lequel la fibre diététique de l'ingrédient végétal est une fibre diététique naturelle.

37. Procédé selon la revendication 28, dans lequel l'amidon de l'ingrédient végétal est l'amidon naturel.

38. Procédé selon la revendication 28, dans lequel l'amidon de l'ingrédient végétal est un amidon qui, dans sa forme naturelle, comprend des granules dont la grandeur moyenne de leur plus grand diamètre est de 20 à 200 µm.

39. Procédé selon la revendication 28, dans lequel la proportion de fibres diététiques dans la matière sèche de l'ingrédient végétal est d'au moins 10% en poids.

40. Procédé selon la revendication 39, dans lequel la proportion de la fibre diététique dans la matière sèche de l'ingrédient végétal est d'au moins 15% en poids.

41. Procédé selon la revendication 28, dans lequel l'ingrédient végétal est une matière végétale naturelle non fractionnée ayant une teneur en eau naturelle d'au moins 70% en poids.

42. Procédé selon la revendication 40, dans lequel l'ingrédient végétal est une tubercule de plante ou une racine de plante.

34

**43.** Procédé selon la revendication 42, dans lequel la tubercule de plante est une pomme de terre.

**44.** Procédé selon la revendication 42, dans lequel la racine de plante est la racine de tapioca, la racine de manioc et la marante.

**45.** Procédé selon la revendication 41, dans lequel l'ingrédient végétal est pré-cuit.

**46.** Procédé selon la revendication 28, dans lequel l'ingrédient végétal présente une teneur inhérente en eau ne dépassant pas 20% en poids.

**47.** Procédé selon la revendication 28, dans lequel l'ingrédient végétal est un mélange d'un composant séparé d'amidon et d'un composant séparé de fibre diététique.

**48.** Procédé selon la revendication 47, dans lequel le composant séparé d'amidon est l'amidon de pomme de terre ou l'amidon de tapioca.

**49.** Procédé selon la revendication 47, dans lequel le composant séparé de fibre diététique est la fibre diététique de pomme de terre, la pulpe de pomme de terre, la fibre de betterave, la fibre de pois et la fibre de haricot.

**50.** Procédé selon la revendication 28, dans lequel on obtient l'ingrédient végétal en complétant une matière végétale naturelle non fractionnée dont la proportion de matière sèche de fibre diététique est inférieure à 5% en poids avec une quantité de fibre diététique séparée non céréale donnant une proportion de fibre diététique non céréale d'au moins 5% en poids.

**51.** Procédé selon la revendication 28, dans lequel on obtient l'ingrédient végétal en complétant une matière végétale naturelle non fractionnée dont la proportion de matière sèche d'amidon est inférieure à 50% en poids avec une quantité d'amidon non céréal séparé donnant une proportion d'amidon non céréal d'au moins 50% en poids.

**52.** Procédé selon la revendication 28, dans lequel la composition comprend un agent de levage de la pâte.

**53.** Procédé selon la revendication 52, dans lequel l'agent de levage est un agent de levage chimique.

**54.** Procédé selon la revendication 28, dans lequel la composition comprend un agent émulsifiant.

**55.** Produit de boulangerie qu'on obtient par un procédé selon l'une quelconque des revendications 28 à 54.

**56.** Produit de boulangerie selon la revendication 55, qui est un cookie préparé à partir d'une composition de pâte ayant une teneur en graisse ne dépassant pas 15% en poids.

**57.** Produit de boulangerie selon la revendication 56, qui est un cookie préparé à partir d'une composition de pâte comprenant :

```
Farine de blé                          41,9% en poids
Sucre de glaçage                       16,1% en poids
Oeuf entier                             3,2% en poids
Margarine, 80% en poids de graisse     16,1% en poids
Fibre de pomme de terre                 0,8% en poids
Amidon de pomme de terre               13,7% en poids
Eau                                     8,1% en poids
```

**58.** Produit de boulangerie selon la revendication 55, qui est un cookie préparé à partir d'une composition de pâte ayant une teneur en graisse ne dépassant pas 8% en poids.

**59.** Produit de boulangerie selon la revendication 58, qui est un cookie préparé à partir d'une composition de pâte comprenant :

```
Farine de blé                                  32,9% en poids
Sucre de glaçage                               17,5% en poids
Oeuf entier                                     3,5% en poids
Margarine, 80% en poids de graisse             8,7% en poids
Fibre de pomme de terre                         0,9% en poids
Amidon de pomme de terre                       26,9% en poids
Eau                                             8,7% en poids
```

**60.** Produit de boulangerie selon la revendication 55, qui est un "pound cake" préparé avec une composition de pâte à frire ayant une teneur en graisse ne dépassant pas 13% en poids.

**61.** Produit de boulangerie selon la revendication 60, qui est un "pound cake" préparé à partir d'une pâte à frire comprenant :

```
Farine de blé                                  25,0% en poids
Amidon                                          1,0% en poids
Sucre              .                           19,3% en poids
Poudre de cuisson                               0,8% en poids
Ester de polyglycérol                           0,3% en poids
Arôme de vanille                               q.s
Oeuf entier                                    25,0% en poids
Margarine, 80% en poids de graisse             12,5% en poids
Pommes de terre broyées pré-cuites             12,5% en poids
```

**62.** Produit de boulangerie selon la revendication 55, qui est un "pound-cake" préparé à partir d'une pâte à frire ayant une teneur en graisse ne dépassant pas 8% en poids.

**63.** Produit de boulangerie selon la revendication 62, qui est un "pound-cake" préparé à partir d'une composition de pâte à frire contenant :
Farine de blé : 25,0% en poids
Amidon : 1,0% en poids
Sucre : 19,3% en poids
Poudre de cuisson : 0,8% en poids
Ester de polyglycérol : 0,3% en poids
Sorbitol, sel, lait de poudre : 3,8% en poids
Arôme de vanille : q.s
Oeuf entier : 25,0% en poids
Margarine, 80% en poids de graisse : 6,3% en poids
Fibre de pomme de terre et amidon de pomme de terre : 6,3% en poids
Eau : 6,3% en poids.

**Revendications pour les Etats contractants suivants : GR, ES**

**1.** Procédé de préparation d'une composition de pâte à pétrir ou frire pour utilisation dans la production de produits de boulangerie autres que le pain à teneur en graisse réduite, choisis parmi les gâteaux de Savoie enrichis, les gâteaux victoria, les "high ratio cakes", les "pound cakes", les cookies contenant au maximum 20% en poids de sucre, les biscuits, les scones et les muffins, présentant une teneur en matière grasse ne dépassant pas 20% en poids quand le produit de boulangerie qu'on doit préparer est un cookie ou un biscuit et qui est au maximum de 13% en poids quand le produit de boulangerie à préparer est un gâteau, la composition contenant de 1 à 40% en poids d'un ingrédient végétal non céréal comprenant des fibres diététiques et un amidon digeste dans un rapport pondéral compris entre 1:50 et 1:1, la proportion des fibres diététiques comprenant au moins 5% en poids de la matière sèche de l'ingrédient végétal qu'on détermine sous forme de polysaccharides non amylacés (PNA), et la proportion d'amidon étant d'au moins 50% en poids de la matière sèche de l'ingrédient végétal, la composition contenant moins de 25% en poids de son et présentant un rapport entre la matière sèche de l'ingrédient végétal non céréal et la graisse compris entre 1:19 et 4,5 : 1.

2. Procédé selon la revendication 1, dans lequel la composition est destinée à préparer un cookie ou un biscuit, la composition ayant une teneur en graisse ne dépassant pas 15% en poids.

3. Procédé selon la revendication 2, dans lequel la teneur en graisse ne dépasse pas 10% en poids, de préférence ne dépasse pas 8% en poids et, surtout est inférieure à 5% en poids.

4. Procédé selon la revendication 1, dans lequel la composition est destinée à préparer un gâteau, la composition ayant une teneur en graisse qui est maximum de 10% en poids, de préférence au maximum de 8% en poids et, mieux encore, ne dépassant pas 5% en poids, surtout de moins de 3% en poids.

5. Procédé selon la revendication 1, dans lequel le rapport de l'ingrédient végétal non céréal (matière sèche) et la graisse est compris entre 1:3 et 1:1.

6. Procédé selon la revendication 1, dans lequel la proportion de l'ingrédient végétal non céréal est comprise entre 1,5 et 20% en poids.

7. Procédé selon la revendication 1, dans lequel l'ingrédient végétal comprend une fibre diététique et de l'amidon dans un rapport compris entre 1:32 et 1:1.

8. Procédé selon la revendication 1, dans lequel l'ingrédient végétal comprend la fibre diététique et l'amidon dans un rapport pondéral de 1:20 à 1:2, de préférence de 1:15 à 1:3 et, surtout, de 1:10 à 1:4.

9. Procédé selon la revendication 1, dans lequel la fibre diététique de l'ingrédient végétal est une fibre diététique naturelle.

10. Procédé selon la revendication 1, dans lequel l'amidon de l'ingrédient végétal est l'amidon naturel.

11. Procédé selon la revendication 1, dans lequel l'amidon de l'ingrédient végétal est un amidon qui, sous forme naturelle, comprend des granules ayant une grosseur moyenne de leur plus grand diamètre comprise entre 20 et 200 μm.

12. Procédé selon la revendication 1, dans lequel la proportion de la fibre diététique dans la matière sèche de l'ingrédient végétal est d'au moins 10% en poids.

13. Procédé selon la revendication 12, dans lequel la proportion de la fibre diététique dans la matière sèche de l'ingrédient végétal est d'au moins 15% en poids.

14. Procédé selon la revendication 1, dans lequel l'ingrédient végétal est une matière végétale naturelle non fractionnée ayant une teneur naturelle en eau d'au moins 70% en poids.

15. Procédé selon la revendication 14, dans lequel l'ingrédient végétal est choisi parmi les tubercules des plantes et les racines des plantes.

16. Procédé selon la revendication 15, dans lequel la tubercule des plantes est la pomme de terre.

17. Procédé selon la revendication 15, dans lequel les racines des plantes sont choisies parmi les racines de tapioca, les racines de manioc et les marantes.

18. Procédé selon la revendication 14, dans lequel l'ingrédient végétal est précuit.

**19.** Procédé selon la revendication 1, dans lequel l'ingrédient végétal présente une teneur inhérente en eau ne dépassant pas 20% en poids.

**20.** Procédé selon la revendication 1, dans lequel l'ingrédient végétal est un mélange du composant amylacé séparé et d'un composant séparé de fibres diététiques.

**21.** Procédé selon la revendication 20, dans lequel le composant amylacé séparé est l'amidon de pomme de terre ou l'amidon de tapioca.

**22.** Procédé selon la revendication 20, dans lequel le composant séparé de fibre diététique est la fibre diététique de pomme de terre, la pulpe de pomme de terre, la fibre de betterave, la fibre de pois ou la fibre de haricot.

**23.** Procédé selon la revendication 1, dans lequel on obtient l'ingrédient végétal en complétant une plante naturelle non fractionnée dont la proportion de matière sèche de fibre diététique est inférieure à 5% en poids avec une quantité de fibre diététique non céréale séparée donnant une proportion de fibre diététique non céréale d'au moins 5% en poids.

**24.** Procédé selon la revendication 1, dans lequel on obtient l'ingrédient végétal en complétant une plante naturelle non fractionnée dont la proportion de matière sèche d'amidon est inférieure à 50% en poids avec une quantité d'amidon séparé non céréal donnant une proportion d'amidon non céréal d'au moins 50% en poids.

**25.** Procédé selon la revendication 1, dans lequel la composition comprend un agent de levage de la pâte.

**26.** Procédé selon la revendication 25, dans lequel l'agent de levage est un agent de levage chimique.

**27.** Procédé selon la revendication 1, dans lequel la composition comprend un émulsifiant.

**28.** Procédé de préparation d'un produit de boulangerie à teneur en graisse réduite, choisi parmi les gâteaux de Savoie enrichis, les gâteaux victoria, les "high ratio cakes", les "pound cakes", les cookies contenant au maximum 20% en poids de sucre, les biscuits, les scones et les muffins, procédé qui consiste :

(1) à préparer une pâte à pétrir ou à frire ayant une teneur en matière grasse qui ne dépasse pas 20% en poids quand le produit de boulangerie à préparer est un cookie ou un biscuit et qui ne dépasse pas 13% en poids quand le produit de boulangerie est un gâteau, la composition contenant de 1 à 40% en poids d'un ingrédient végétal non céréal comprenant une fibre diététique et un amidon digeste en un rapport pondéral compris entre 1:50 et 1:1, la proportion de la fibre diététique étant d'au moins 5% en poids de l'ingrédient végétal (matière sèche) quand on la détermine comme des polysaccharides non amylacés (PNA) et la proportion d'amidon étant d'au moins 50% en poids de l'ingrédient végétal (matière sèche), la composition contenant moins de 25% en poids de son et présentant un rapport entre l'ingrédient végétal non céréal (matière sèche) et la graisse qui est compris entre 1:19 et 4,5:1, pour obtenir ainsi une pâte à pétrir ou à frire,

(2) à diviser facultativement la pâte à pétrir ou à frire en portions appropriées, et

(3) à cuire au four la pâte à pétrir ou à frire pour obtenir un produit de boulangerie à teneur réduite en matière grasse.

**29.** Procédé selon la revendication 28, dans lequel la composition est prévue pour production d'un cookie ou d'un biscuit et sa teneur en matière grasse ne dépasse pas 15% en poids.

**30.** Procédé selon la revendication 29, dans lequel la composition présente une teneur en matière grasse ne dépassant pas 10% en poids, de préférence ne dépassant pas 8% en poids et surtout, inférieure à 5% en poids.

**31.** Procédé selon la revendication 28, dans lequel la composition est destinée à faire des gâteaux et présente une teneur en matière grasse qui ne dépasse pas 10% en poids, de préférence ne dépasse pas 8% en poids, mieux ne dépasse pas 5% en poids et, surtout, est inférieure à 3% en poids.

**32.** Procédé selon la revendication 28, dans lequel le rapport entre la matière sèche de l'ingrédient végétal non céréal et la graisse dans la pâte à pétrir ou à frire est compris entre 1:3 et 1:1.

33. Procédé selon la revendication 28, dans lequel la composition de pâte à pétrir ou à frire est destinée à la préparation d'un produit de boulangerie autre que le pain, la proportion de l'ingrédient végétal non céréal étant comprise entre 1,5 et 20% en poids.

34. Procédé selon la revendication 28, dans lequel l'ingrédient végétal comprend des fibres diététiques et de l'amidon dans un rapport pondéral de 1:32 à 1:1.

35. Procédé selon la revendication 34, dans lequel l'ngrédient végétal non céréal de la pâte à pétrir ou à frire comprend des fibres diététiques et de l'amidon dans un rapport pondéral de 1:20 à 1:2, de préférence de 1:15 à 1:3 et, surtout, de 1:10 à 1:4.

36. Procédé selon la revendication 28, dans lequel la fibre diététique de l'ingrédient végétal est une fibre diététique naturelle.

37. Procédé selon la revendication 28, dans lequel l'amidon de l'ingrédient végétal est l'amidon naturel.

38. Procédé selon la revendication 28, dans lequel l'amidon de l'ingrédient végétal est un amidon qui, dans sa forme naturelle, comprend des granules dont la grandeur moyenne de leur plus grand diamètre est de 20 à 200 µm.

39. Procédé selon la revendication 28, dans lequel la proportion de fibres diététiques dans la matière sèche de l'ingrédient végétal est d'au moins 10% en poids.

40. Procédé selon la revendication 39, dans lequel la proportion de la fibre diététique dans la matière sèche de l'ingrédient végétal est d'au moins 15% en poids.

41. Procédé selon la revendication 28, dans lequel l'ingrédient végétal est une matière végétale naturelle non fractionnée ayant une teneur en eau naturelle d'au moins 70% en poids.

42. Procédé selon la revendication 40, dans lequel l'ingrédient végétal est une tubercule de plante ou une racine de plante.

43. Procédé selon la revendication 42, dans lequel la tubercule de plante est une pomme de terre.

44. Procédé selon la revendication 42, dans lequel la racine de plante est la racine de tapioca, la racine de manioc et la marante.

45. Procédé selon la revendication 41, dans lequel l'ingrédient végétal est pré-cuit.

46. Procédé selon la revendication 28, dans lequel l'ingrédient végétal présente une teneur inhérente en eau ne dépassant pas 20% en poids.

47. Procédé selon la revendication 28, dans lequel l'ingrédient végétal est un mélange d'un composant séparé d'amidon et d'un composant séparé de fibre diététique.

48. Procédé selon la revendication 47, dans lequel le composant séparé d'amidon est l'amidon de pomme de terre ou l'amidon de tapioca.

49. Procédé selon la revendication 47, dans lequel le composant séparé de fibre diététique est la fibre diététique de pomme de terre, la pulpe de pomme de terre, la fibre de betterave, la fibre de pois et la fibre de haricot.

50. Procédé selon la revendication 28, dans lequel on obtient l'ingrédient végétal en complétant une matière végétale naturelle.non fractionnée dont la proportion de matière sèche de fibre diététique est inférieure à 5% en poids avec une quantité de fibre diététique séparée non céréale donnant une proportion de fibre diététique non céréale d'au moins 5% en poids.

51. Procédé selon la revendication 28, dans lequel on obtient l'ingrédient végétal en complétant une matière végétale naturelle non fractionnée dont la proportion de matière sèche d'amidon est inférieure à 50% en poids avec une quantité d'amidon non. céréal séparé donnant une proportion d'amidon non céréal d'au moins 50% en poids.

**52.** Procédé selon la revendication 28, dans lequel la composition comprend un agent de levage de la pâte.

**53.** Procédé selon la revendication 52, dans lequel l'agent de levage est un agent de levage chimique.

**54.** Procédé selon la revendication 28, dans lequel la composition comprend un agent émulsifiant.

**55.** Procédé selon la revendication 28, pour préparer un produit de boulangerie qui est un cookie préparé à partir d'une composition de pâte ayant une teneur en graisse ne dépassant pas 15% en poids.

**56.** Procédé selon la revendication 55, dans lequel le cookie est préparé à partir d'une composition de pâte comprenant :

| | |
|---|---|
| Farine de blé | 41,9% en poids |
| Sucre de glaçage | 16,1% en poids |
| Oeuf entier | 3,2% en poids |
| Margarine, 80% en poids de graisse | 16,1% en poids |
| Fibre de pomme de terre | 0,8% en poids |
| Amidon de pomme de terre | 13,7% en poids |
| Eau | 8,1% en poids |

**57.** Procédé selon la revendication 55, dans lequel le cookie est préparé à partir d'une composition de pâte ayant une teneur en graisse ne dépassant pas 8% en poids.

**58.** Procédé selon la revendication 57, dans lequel le cookie est préparé à partir d'une composition de pâte comprenant :

| | |
|---|---|
| Farine de blé | 32,9% en poids |
| Sucre de glaçage | 17,5% en poids |
| Oeuf entier | 3,5% en poids |
| Margarine, 80% en poids de graisse | 8,7% en poids |
| Fibre de pomme de terre | 0,9% en poids |
| Amidon de pomme de terre | 26,9% en poids |
| Eau | 8,7% en poids |

**59.** Procédé selon la revendication 28, pour la fabrication d'un "pound cake" préparé avec une composition de pâte à frire ayant une teneur en graisse ne dépassant pas 13% en poids.

**60.** Procédé selon la revendication 59, dans lequel le "pound cake" est préparé à partir d'une pâte à frire comprenant :

| | |
|---|---|
| Farine de blé | 25,0% en poids |
| Amidon | 1,0% en poids |
| Sucre | 19,3% en poids |
| Poudre de cuisson | 0,8% en poids |
| Ester de polyglycérol | 0,3% en poids |
| Arôme de vanille | q.s |
| Oeuf entier | 25,0% en poids |
| Margarine, 80% en poids de graisse | 12,5% en poids |
| Pommes de terre broyées pré-cuites | 12,5% en poids |

61. Procédé selon la revendication 59, dans lequel le "pound cake" est préparé à partir d'une pâte à frire ayant une teneur en graisse ne dépassant pas 8% en poids.

62. Procédé selon la revendication 61, dans lequel le "pound cake" est préparé à partir d'une composition de pâte à frire contenant :
Farine de blé : 25,0% en poids
Amidon : 1,0% en poids
Sucre : 19,3% en poids
Poudre de cuisson : 0,8% en poids
Ester de polyglycérol : 0,3% en poids
Sorbitol, sel, lait en poudre : 3,8% en poids
Arôme de vanille : q.s
Oeuf entier : 25,0% en poids
Margarine, 80% en poids de graisse : 6,3% en poids
Fibre de pomme de terre et amidon de pomme de terre : 6,3% en poids
Eau : 6,3% en poids.